(19) Europäisches Patentamt
European Patent Office
Office européen des brevets

(11) **EP 4 475 237 A1**

(12) **EUROPEAN PATENT APPLICATION**
published in accordance with Art. 153(4) EPC

(43) Date of publication:
**11.12.2024 Bulletin 2024/50**

(21) Application number: **23749972.8**

(22) Date of filing: **03.02.2023**

(51) International Patent Classification (IPC):
***H01M 8/103*** *(2016.01)* ***C08J 5/22*** *(2006.01)*
***C08F 236/10*** *(2006.01)* ***C08G 61/02*** *(2006.01)*
***H01M 8/1039*** *(2016.01)*

(52) Cooperative Patent Classification (CPC):
**C08F 236/10; C08G 61/02; C08J 5/22; H01M 8/103; H01M 8/1039;** Y02E 60/50

(86) International application number:
**PCT/KR2023/001561**

(87) International publication number:
**WO 2023/149739 (10.08.2023 Gazette 2023/32)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **03.02.2022 KR 20220014254**
**02.02.2023 KR 20230014346**

(71) Applicant: **Hanwha Solutions Corporation**
**Jung-gu**
**Seoul 04541 (KR)**

(72) Inventors:
- **KIM, Tae-Hyun**
**Incheon 22003 (KR)**
- **MIN, Kyungwhan**
**Incheon 21998 (KR)**
- **LEE, Yerim**
**Incheon 22100 (KR)**

(74) Representative: **Berggren Oy**
**P.O. Box 16**
**Eteläinen Rautatiekatu 10A**
**00101 Helsinki (FI)**

(54) **CROSSLINKED COPOLYMER, POLYMER MEMBRANE COMPRISING SAME, AND ANION EXCHANGE MEMBRANE COMPRISING POLYMER MEMBRANE**

(57) The present disclosure relates to a novel crosslinked copolymer that can be preferably used as an anion exchange membrane (AEM) material for fuel cells because of its excellent mechanical properties, excellent stability against hydroxide ions, and high ion conductivity and hydration.

【FIG. 1】

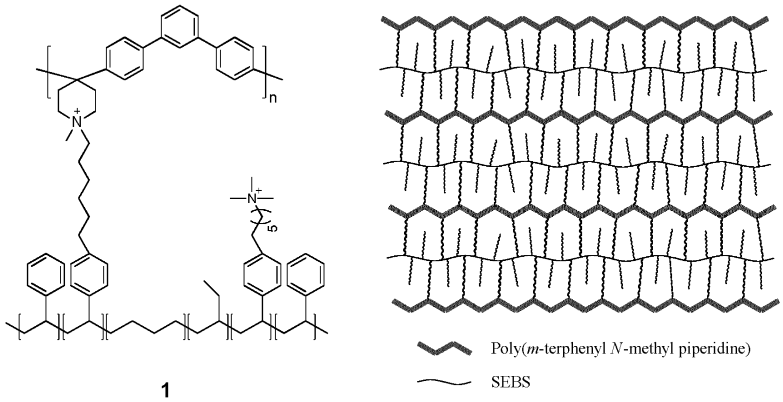


EP 4 475 237 A1



Processed by Luminess, 75001 PARIS (FR)

## Description

[TECHNICAL FIELD]

Cross-reference to Related Application(s)

This application claims the benefits of Korean Patent Applications No. 1 0-2022-0014254 filed on February 3, 2022 and No. 1 0-2023-0014346 filed on February 2, 2023 with the Korean Intellectual Property Office, the disclosure of which is incorporated herein by reference in its entirety.

The present disclosure relates to a crosslinked copolymer, a polymer membrane including the same, and an anion exchange membrane including the polymer membrane.

[BACKGROUND OF ART]

Anion exchange membrane fuel cells (AEMFCs) are continuously improving, especially in terms of power density, and are also becoming increasingly competitive in price, as non-platinum group metals (non-PGMs) are being applied as catalysts. Due to these advantages, AEMFCs have attracted significant attention as an alternative to proton exchange membrane fuel cells (PEMFCs), which contain proton exchange membranes (PEMs) that use costly platinum group metal (PGM)-based catalysts and perfluorinated polymers, such as Nafion. However, further improvements in cell durability and power density are required for these AEMFCs to be commercialized in practice. Therefore, the performance of the AEMs (anion exchange membranes), which significantly affects the overall performance of AEMFCs, must be improved to the desired level. To this end, it is necessary to develop new AEMs that can improve the ion conductivity while remaining physicochemically stable under the actual operating conditions of AEMFCs (i.e., high pH, temperature, and RH conditions).

An AEM is typically composed of polymer backbones, that is, the hydrophobic components that govern the overall membrane properties, and ion-conducting head groups, that is, the hydrophilic components involved in the transport of hydroxide ions ($OH^-$). Thus, both conducting head groups and polymer backbones need to be studied simultaneously to enhance the overall performance of AEMs.

Among ion-conducting head groups, cyclic ammonium derivatives, such as piperidinium, pyrrolidinium, substituted imidazolium, and 6-azonia-spiro[5,5]undecane, are frequent subjects of study due to their high stability. Quaternary ammonium groups, especially hexyl trimethyl ammonium, remain widely used because of their chemical stability, which is almost equivalent to that of cyclic ammonium derivatives.

Meanwhile, various polymer backbones, such as poly(phenylene oxide) (PPO), poly(ether ketone) (PEK), poly(ether sulfone) (PES), polybenzimidazole (PBI), poly (phenylene) (PP), polyolefin, spirobisindane, and polynorbornene (NB) have been studied. In addition, various attempts have also been made to improve the performance of AEMs by employing different strategies based on multi-block copolymers, fluorinated polymers, spacer-type polymers, multi-cation systems, and crosslinked polymers. Despite all these efforts, however, only a few of these AEMs perform comparably to their PEM counterparts. These AEMs were characterized by polycarbazole, polybiphenyl, polyterphenyl, or polybibenzyl as the aromatic polymer backbone with piperidinium or hexyl trimethyl ammonium as the ion-conducting head group. In contrast to PPO or PES, these polymers ensure excellent chemical stability against hydroxide ions because they are based on aryl-ether free backbones. Not only that, their ion-conducting head groups are contained within or have been grafted onto their backbone structure, thereby providing high ion exchange capacity (IEC), conducting properties, and overall cell performance.

However, these rigid aromatic polymers generally exhibit low water uptake (WU). In ion-conducting polymers, such as AEMs and PEMs, water tends to act as a medium for ion conduction, and thus high ionic conductivity can only be achieved with a certain level of WU. In previous studies, these rigid aromatic polymer-based AEMs provided the required levels of both WU and ionic conductivity because they have relatively high IEC of 2.5 meq $g^{-1}$ or more (i.e., by introducing more ion-conducting groups). However, ion-conducting head groups with positive charges are relatively less stable against hydroxide ions compared to the polymer backbone. This means that the introduction of more ion-conducting groups may negatively affect the stability of AEMs.

In addition, these AEMs were mechanically tough but had relatively poor elastic properties. The mechanical properties of AEMs can dictate the membrane failures that occur during the actual cell operation (e.g., pinhole formation or failures at the edges of the membrane electrode assembly (MEA) active area), and achieving a certain level of elongation, therefore, is preferred to secure high performance of AEMFCs.

Poly(styrene-b-ethylene-co-butylene-b-styrene) (SEBS) is a polymer that exhibits the phase separation between styrene and butylene as a block structure, and that also has excellent elastic properties and chemical stability. Various attempts have been made to use SEBS as an AEM by introducing ion-conducting head groups, and some of these efforts have resulted in the development of AEMs with high ionic conductivity due to their excellent phase separation,

despite relatively low IEC values.

At the same time, these SEBS-based AEMs have very low tensile strength and high swelling ratios (SRs). These poor mechanical properties make it more difficult to process SEBS into a thin film and may also result in too much swelling in humidified conditions, that is, the actual operating conditions of fuel cells. These SEBS polymers also have highly limited solubility. Thus, it is very difficult to improve the conductivity or the mechanical properties of the corresponding AEMs by tuning the functionalization degree of SEBS or by blending or grafting it with other molecules that have the desired properties.

[PRIOR ART LITERATURE]

(Patent Literature)

Korean Patent Registration No. 10-1535062

(Non-Patent Literature)

Nat. Energy 4 (2019) 392-398
Nat. Commun. 12 (2021) 2367
Adv. Funct. Mater. 28 (2018) 1-10
Int. J. Hydrogen Energy 46 (2021) 18524-18533
J. Mater. Chem. A. 9 (2021) 327-337
J. Membr. Sci. 642 (2022), 119966
ACS Macro Lett. 6 (2017) 566-570
Energy Environ. Sci. 13 (2020) 3633-3645
J. Power Sources 487 (2021), 229429
J. Power Sources 480 (2020), 228805
Angew. Chem. Int. Ed. 61(2022) 1-8
J. Membr. Sci. 643 (2022), 120029
J. Membr. Sci. 599 (2020), 117829
J. Membr. Sci. 644 (2022), 120109
Eur. Polym. J. 154 (2021), 110528
J. Polym. Sci. 58 (2020) 2181-2196
Int. J. Hydrogen Energy 46 (2021) 36301-36313
Int. J.Hydrogen Energy 45 (2020) 15658-15671
J. Mater. Chem. A. 9 (2021) 1062-1079
J. Membr. Sci. 633 (2021), 119418
Membranes 10 (2020) 1-16
J. Membr. Sci. 598 (2020)
Macromolecules 52 (2019) 2139-2147
J. Membr. Sci. 588 (2019), 117120
Int. J. Hydrogen Energy 44 (2019) 24954-24964


[DETAILED DESCRIPTION OF THE INVENTION]

[Technical Problem]

The present disclosure relates to a novel cross-linked copolymer that can be preferably used as an anion exchange membrane (AEM) material for fuel cells because of its excellent mechanical properties, excellent stability against hydroxide ions, and high ion conductivity and hydration.

[Technical Solution]

According to one embodiment of the present disclosure, there is provided a crosslinked copolymer including a first chain represented by the following Chemical Formula 1 and a second chain represented by the following Chemical Formula 2, wherein the first chain and the second chain are crosslinked with each other:

[Chemical Formula 1]

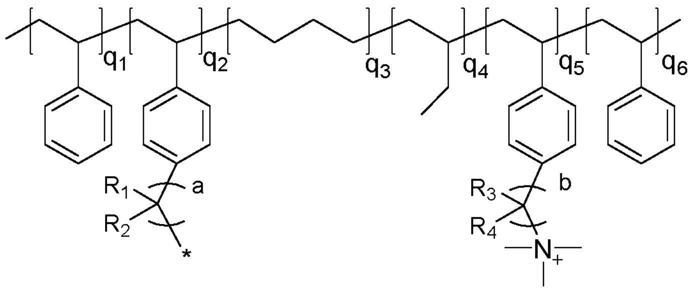

in Chemical Formula 1,

* is a bonding position with Chemical Formula 2,
a sum of $q_1$, $q_2$, $q_5$, and $q_6$ is an integer of 100 to 1,000,
a sum of $q_3$ and $q_4$ is an integer of 150 to 2,000,
a and b are each independently an integer of 3 to 10, and
$R_1$ to $R_4$ are each independently hydrogen or $-(CH_2)_p-CH_3$, wherein p is an integer of 0 to 5,

[Chemical Formula 2]

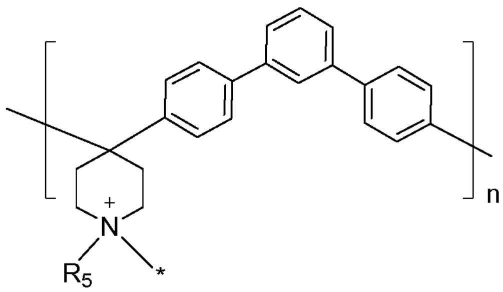

in Chemical Formula 2,
* is a bonding position with Chemical Formula 1,
$R_5$ is $-(CH_2)_{p'}-CH_3$, wherein p' is an integer of 0 to 5, and
n is an integer of 10 to 1000.

In addition, according to one embodiment of the present disclosure, there is provided a polymer membrane including the above-described crosslinked copolymer.

Further, according to one embodiment of the present disclosure, there is provided a method for preparing a crosslinked copolymer including the steps of:

(a) preparing a poly(styrene-b-ethylene-co-butylene-b-styrene)-based polymer represented by the following Chemical Formula 1-1;
(b) preparing a poly(m-terphenyl N-alkyl piperidine) polymer represented by the following Chemical Formula 2-1; and
(c) preparing a crosslinked copolymer by crosslinking the poly(styrene-b-ethylene-co-butylene-b-styrene)-based polymer and the poly(m-terphenyl N-methyl piperidine) polymer:

[Chemical Formula 1-1]

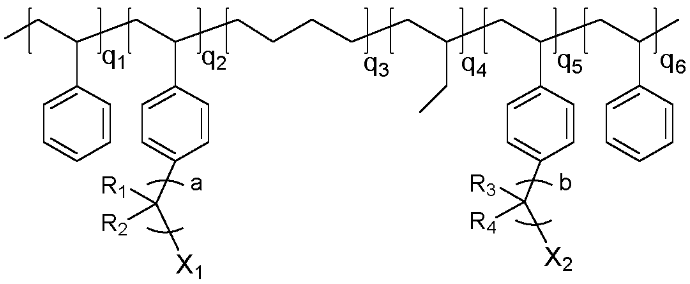

in Chemical Formula 1-1,
a sum of $q_1$, $q_2$, $q_5$, and $q_6$ is an integer of 100 to 1,000,
a sum of $q_3$ and $q_4$ is an integer of 150 to 2,000,
a and b are each independently an integer of 3 to 10, and
$R_1$ to $R_4$ are each independently hydrogen or $-(CH_2)_p-CH_3$, wherein p is an integer of 0 to 5, and
$X_1$ and $X_2$ are each independently a halogen group,

[Chemical Formula 2-1]

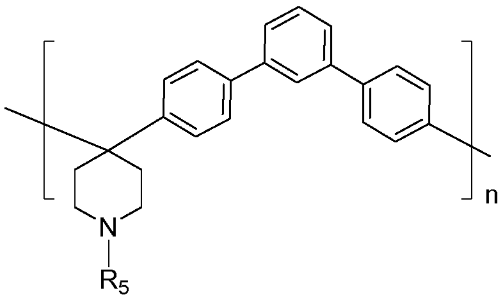

in Chemical Formula 2-1,
$R_5$ is $-(CH_2)_{p'}-CH_3$, wherein p' is an integer of 0 to 5, and
n is an integer of 10 to 1000.

[ADVANTAGEOUS EFFECTS]

The crosslinked copolymer of the present disclosure has excellent dimensional stability while having high water uptake (WU), and exhibit high ionic conductivity, hydration, and alkaline stability. In addition, the crosslinked copolymer has excellent mechanical properties such as tensile strength and elongation properties.

As described above, the crosslinked copolymer of the present disclosure has excellent electrochemical properties and mechanical properties, so it can be suitably used as an anion exchange membrane material.

[BRIEF DESCRIPTION OF THE DRAWINGS]

FIG. 1 shows the structure of poly(m-terphenyl N-methyl piperidinium)-SEBS membrane 1 (x-PmTP-SEBS) according to one embodiment of the present disclosure.

FIG. 2. shows (a) hydration number (λ) vs. IEC and (b) mechanical properties of x-PmTP-SEBS (star), compared to the SEBS-based AEMs (circle) and poly(phenylene)-based AEMs (square) in their $OH^-$ forms reported in the literature at room temperature.

FIG. 3 shows (a-c) SEM surface and (d-f) AFM images of PmTP-SEBS membranes: (a and d) 30x-PmTP-SEBS, (b and e) 40x-PmTP-SEBS, and (c and f) 50xPmTP-SEBS membranes.

FIG. 4 shows SAXS profiles of x-PmTP-SEBS membranes.

FIG. 5 shows (a) TGA graphs of x-PmTP-SEBS membranes from 30 °C to 300 °C and (b) the relative ratios of free

water to bound water in x-PmTP-SEBS membranes.

FIG. 6 shows (a) ion conductivity (solid line) and normalized conductivity (dotted line) and (b) a comparison of the normalized conductivity of the x-PmTP-SEBS membranes compared with that of the representative membranes from the literature.

FIG. 7 shows (a) hydroxide ion conductivity and (b) remaining IEC of the x-PmTP-SEBS membranes in 2 M KOH at 80 °C.

FIG. 8 shows single cell performance of x-PmTP-SEBS membranes (a) without backpressure and (b) with 0.1 MPa backpressure.

FIG. 9 shows $^1H$ NMR spectrum of poly(m-terphenyl N-piperidine) 2.

FIG. 10 shows $^1H$ NMR spectra of (a) SEBS, (b) bromohexanoyl SEBS 4, and (c) bromohexyl SEBS 3.

FIG. 11 shows FTIR spectra of bromohexanoyl SEBS 4, its reduced form, and bromohexyl SEBS 3.

FIG. 12 shows photographs of crosslinked (m-terphenyl N-methyl piperidinium)-SEBS membranes (x-PmTP-SEBS) with different degrees of crosslinking.

FIG. 13 shows FTIR spectra of x-PmTP-SEBS membranes with different degrees of crosslinking.

FIG. 14 shows mechanical properties of x-PmTP-SEBS AEMs at 50% RH condition.

FIG. 15 shows (a) TGA and derivative thermogram (DTG) graphs, and (b) differential scanning calorimetry (DSC) graphs of x-PmTP-SEBS membranes.

FIG. 16 shows DSC plots of x-PmTP-SEBS membranes from (a) -40 °C to 20 °C and (b) -10 °C to 0 °C.

FIG. 17 shows a comparison of peak power density of the x-PmTP-SEBS membranes with that of PP- and SEBS-based AEMFCs.

[DETAILED DESCRIPTION OF THE EMBODIMENTS]

The terminology used herein is for the purpose of describing particular embodiments only and is not intended to be limiting of the invention. The singular forms are intended to include the plural forms as well, unless the context clearly indicates otherwise.

It will be further understood that the terms "include", "comprise", or "have" when used in this disclosure, specify the presence of stated features, steps, components, or combinations thereof, but do not preclude the presence or addition of one or more other features, steps, components, or combinations thereof.

As the present invention can be variously modified and have various forms, specific embodiments thereof are shown by way of examples and will be described in detail. However, it is not intended to limit the present invention to the particular form disclosed and it should be understood that the present invention includes all modifications, equivalents, and replacements within the idea and technical scope of the present invention.

Hereinafter, the present invention will be described in detail.

According to one embodiment of the present disclosure, there is provided a crosslinked copolymer including a first chain represented by the following Chemical Formula 1 and a second chain represented by the following Chemical Formula 2, wherein the first chain and the second chain are crosslinked with each other:

[Chemical Formula 1]

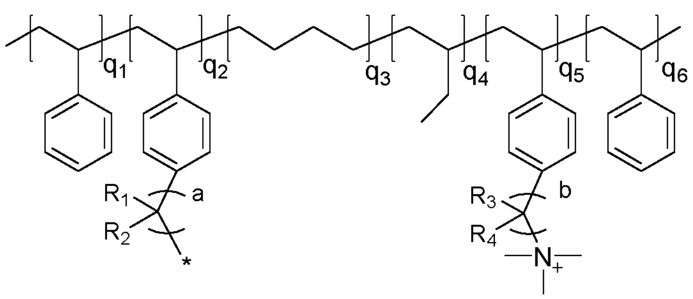

in Chemical Formula 1,

* is a bonding position with Chemical Formula 2,

a sum of $q_1$, $q_2$, $q_5$, and $q_6$ is an integer of 100 to 1,000,

a sum of $q_3$ and $q_4$ is an integer of 150 to 2,000,

a and b are each independently an integer of 3 to 10, and

$R_1$ to $R_4$ are each independently hydrogen or $-(CH_2)_p-CH_3$, wherein p is an integer of 0 to 5,

[Chemical Formula 2]

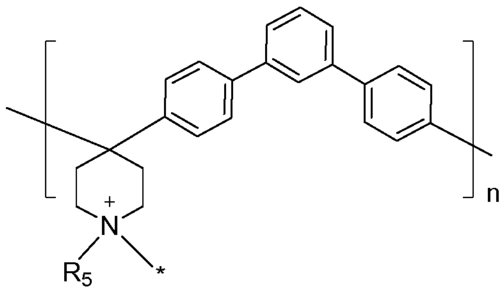

in Chemical Formula 2,
* is a bonding position with Chemical Formula 1,
$R_5$ is $-(CH_2)_{p'}-CH_3$, wherein p' is an integer of 0 to 5, and
n is an integer of 10 to 1000.

The crosslinked copolymer of the present disclosure is characterized in that a first chain including poly(styrene-*b*-ethylene-*co*-butylene-*b*-styrene) (SEBS) and a second chain including poly(m-terphenyl N-alkyl piperidine) (PmTP) are crosslinked.

As this structure is satisfied, the crosslinked copolymer exhibits higher tensile strength and Young's modulus than conventional SEBS-based crosslinked copolymers, and has significantly improved elongation characteristics compared to PP-based polymers. In addition, the crosslinked copolymer exhibits high water retention capacity and high hydration number due to the free volume induced by the kinked structure of m-terphenyl, and thus exhibits high ionic conductivity. In addition, the crosslinked copolymer has excellent alkaline stability and shows a shielding effect due to the high hydration number. Accordingly, the crosslinked copolymer may be suitably used as an anion exchange membrane for fuel cells or the like.

The ratio of the first chain represented by the Chemical Formula 1 and the second chain represented by the Chemical Formula 2 may be adjusted according to desired physical properties. For example, the crosslinked copolymer may include 10 mol or more, 20 mol or more, 30 mol or more, or 40 mol or more, and 70 mol or less, 60 mol or less, or 50 mol or less of the second chain based on 100 mol of the first chain. When the ratio of the first chain and the second chain of the crosslinked copolymer satisfies the above range, excellent mechanical properties and electrochemical properties may be achieved.

Preferably, the sum of $q_1$, $q_2$, $q_5$, and $q_6$ may be an integer of 100 or more, 150 or more, 200 or more, 250 or more, 300 or more, 350 or more, 400 or more, 450 or more, or 500 or more, and 1,000 or less, 950 or less, 900 or less, 850 or less, or 800 or less.

Preferably, the sum of $q_3$ and $q_4$ may be an integer of 150 or more, 200 or more, 250 or more, 300 or more, 350 or more, 400 or more, 450 or more, 500 or more, 550 or more, or 600 or more, and 2,000 or less, 1,800 or less, 1,600 or less, 1,500 or less, 1,400 or less, 1,200 or less, or 1,000 or less.

Preferably, $q_1$ to $q_6$ may each independently be an integer of 10 or more, 20 or more, 25 or more, or 30 or more, and 500 or less, 450 or less, 400 or less, 350 or less, or 300 or less.

Preferably, the ratio of the sum of $q_1$, $q_2$, $q_5$, and $q_6$ to the sum of $q_1$ to $q_6$, that is, the total mole fraction of styrene-derived repeating units relative to all repeating units in Chemical Formula 1 may be 0.2 or more, 0.25 or more, or 0.3 or more, and 0.5 or less, or 0.45 or less.

Preferably, the ratio of the sum of $q_1$ to $q_6$ to the sum of $q_1$, $q_2$, $q_5$, and $q_6$, that is, the total mole fraction of unsubstituted styrene repeating units relative to all styrene-derived repeating units in Chemical Formula 1 may be 0.2 or more, 0.25 or more, 0.3 or more, or 0.35 or more, and 0.5 or less, 0.45 or less, or 0.4 or less.

Preferably, n is an integer of 10 or more, 100 or more, or 150 or more, and 1000 or less, or 500 or less.

Preferably, a and b may each independently be an integer of 3 or more, or 4 or more, and 10 or less, 9 or less, 8 or less, 7 or less, or 6 or less.

Preferably, $R_1$ to $R_4$ are each independently hydrogen or $-(CH_2)_x-CH_3$, and x may be an integer of 0 to 3, or an integer of 0 to 2. Preferably, $R_1$ to $R_4$ may all be hydrogen.

Specifically, the crosslinked copolymer may include a repeating unit represented by the following Chemical Formula 3:

[Chemical Formula 3]

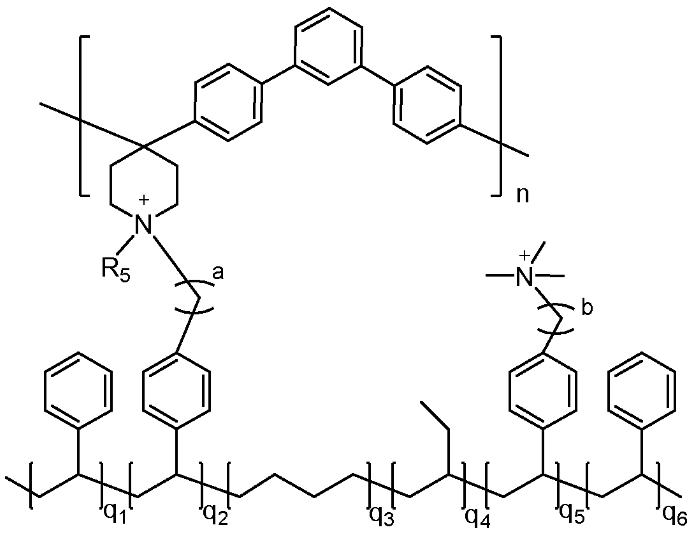

in Chemical Formula 3, $q_1$ to $q_6$, a, b, and n are as defined in the Chemical Formulae 1 and 2.

Preferably, the crosslinked copolymer may include a repeating unit represented by the following Chemical Formula 4:

[Chemical Formula 4]

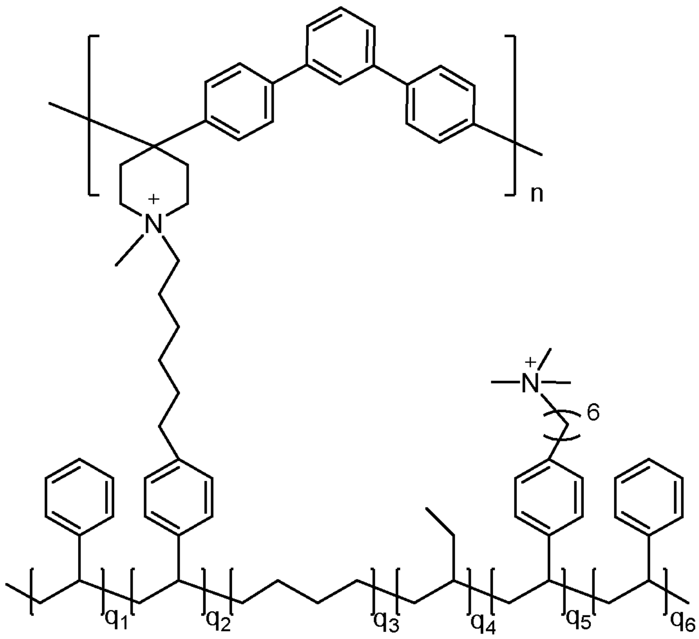

in Chemical Formula 4, $q_1$ to $q_6$, and n are as defined in the Chemical Formulae 1 and 2.

FIG. 1 shows a cross-linked structure of the compound (1) represented by Chemical Formula 4 as one embodiment of the present disclosure. As shown on the right side of FIG. 1, the crosslinked copolymer of the present disclosure has a cross-linked structure in which a poly(styrene-b-ethylene-co-butylene-b-styrene)-based polymer and a poly(m-terphenyl N-alkyl piperidine) polymer are crosslinked with each other. Due to these structural characteristics, the crosslinked copolymer exhibits high tensile strength and elongation, and has high water retention capacity and hydration number, thereby exhibiting excellent ionic conductivity and cell performance.

The above crosslinked copolymer has a positively charged quaternary ammonium group and can selectively pass only anions. Therefore, the crosslinked copolymer can be applied as an anion exchange membrane. The counterion (anion) group for the cation (quaternary ammonium group) of the crosslinked copolymer may be $OH^-$, $Cl^-$, Br-, or $HCO_3^-$,

preferably OH-.

Accordingly, according to one embodiment of the present disclosure, there is provided a polymer membrane including the crosslinked copolymer.

The polymer membrane including the crosslinked copolymer may have a thickness of 20 μm or more, 30 μm or more, 45 μm or more, or 55 μm or more, and 70 μm or less, 60 μm or less, or 55 μm or less. When the polymer membrane has a thickness satisfying the above range, it exhibits high mechanical properties and excellent electrochemical properties, making it suitable for use as an anion exchange membrane.

As the above-described polymer membrane includes the crosslinked copolymer including the first chain and the second chain, it has improved mechanical strength compared to conventional polymers for AEMs, shows high ionic conductivity while exhibiting appropriate IEC, and has great alkaline stability. Accordingly, a polymer membrane having the above physical properties may be suitably used as an anion exchange membrane included in a fuel cell or the like.

Meanwhile, according to one embodiment of the present disclosure, there is provided a method for preparing the above-described crosslinked copolymer. Specifically, the method for preparing the crosslinked copolymer includes the following steps.

(a) preparing a poly(styrene-b-ethylene-co-butylene-b-styrene)-based polymer represented by the following Chemical Formula 1-1;
(b) preparing a poly(m-terphenyl N-alkyl piperidine) polymer represented by the following Chemical Formula 2-1; and
(c) preparing a crosslinked copolymer by crosslinking the poly(styrene-b-ethylene-co-butylene-b-styrene)-based polymer and the poly(m-terphenyl N-methyl piperidine) polymer:

[Chemical Formula 1-1]

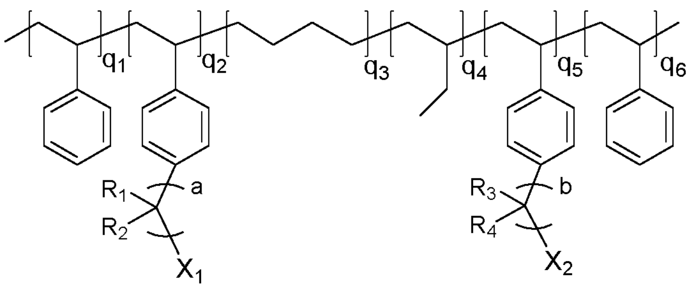

in Chemical Formula 1-1,
a sum of $q_1$, $q_2$, $q_5$, and $q_6$ is an integer of 100 to 1,000,
a sum of $q_3$ and $q_4$ is an integer of 150 to 2,000,
a and b are each independently an integer of 3 to 10, and
$R_1$ to $R_4$ are each independently hydrogen or $-(CH_2)_p-CH_3$, wherein p is an integer of 0 to 5, and
$X_1$ and $X_2$ are each independently a halogen group,

[Chemical Formula 2-1]

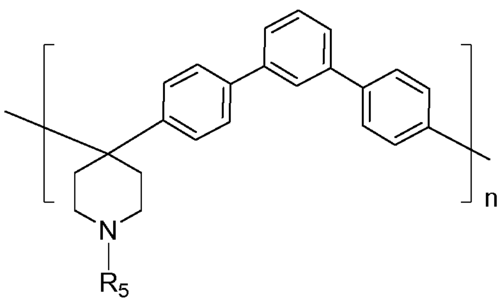

in Chemical Formula 2-1,
$R_5$ is $-(CH_2)_{p'}-CH_3$, wherein p' is an integer of 0 to 5, and
n is an integer of 10 to 1000.

Preferred ranges of $q_1$ to $q_6$, a, b, $R_1$ to $R_4$, and n in Chemical Formulae 1-1 and 2-1 are the same as those described in Chemical Formulae 1 and 2 above.

$X_1$ and $X_2$ are each independently F, Cl, Br, or I, preferably Br.

The step (a) is a step of introducing a halogen alkyl group into the styrene portion of the SEBS polymer. Specifically, the poly(styrene-b-ethylene-co-butylene-b-styrene)-based polymer represented by Chemical Formula 1-1 can be prepared through a Friedel-Crafts acylation reaction of SEBS and a reduction reaction of a carbonyl group.

The acyl halide used in the acylation reaction is selected in consideration of the number of a and b. Specifically, as the acyl halide, alkanoyl chloride having a halogen group at the end of an alkyl chain represented by X-R-COCl (wherein X is halogen and R is $C_{1-29}$ alkyl) may be used. When a and b are different from each other or $X_1$ and $X_2$ are different from each other, the acylation reaction may be performed two or more times using different types of acyl halides.

Aluminum chloride ($AlCl_3$) may be used as a catalyst for the acylation reaction, and the reaction may be performed at 20 to 30 °C for 8 to 24 hours.

The reduction reaction of a carbonyl group may be performed using methods known in the art without limitation. For example, the carbonyl group may be reduced by adding triethylsilane and trifluoroacetic acid, followed by reacting at 90 to 120 °C for 20 to 30 hours. Through this reaction, a poly(styrene-b-ethylene-co-butylene-b-styrene)-based polymer represented by the Chemical Formula 1-1 can be obtained.

It is preferable that the poly(styrene-*b*-ethylene-*co*-butylene-*b*-styrene)-based copolymer contains 30 mol or more, 40 mol or more, 50 mol or more, 55 mol or more, or 60 mol or more, and 90 mol or less, 80 mol or less, 75 mol or less, 70 mol or less, or 65 mol or less of halogen groups based on 100 mol of styrene repeating units. The number of moles of halogen groups relative to styrene repeating units can be adjusted by adjusting the number of moles of acyl halide relative to the number of moles of styrene in the SEBS polymer during the acylation reaction.

The step (b) is a step of preparing a poly(m-terphenyl N-alkyl piperidine) polymer. For example, a poly(m-terphenyl N-alkyl piperidine) polymer may be prepared by reacting m-terphenyl and N-alkyl-4-piperidone in the presence of trifluoroacetic acid and trifluoromethanesulfonic acid. The reaction may be carried out, for example, at 0 to 10 °C for 12 to 48 hours.

The step (c) is a step of preparing a crosslinked copolymer by crosslinking the poly(styrene-*b*-ethylene-*co*-butylene-*b*-styrene)-based polymer and the poly(m-terphenyl N-methyl piperidine) polymer. Since the poly(styrene-*b*-ethylene-*co*-butylene-*b*-styrene)-based polymer contains a halogen group and the poly(m-terphenyl N-alkyl piperidine) polymer contains a tertiary amine group, the two polymers can be easily crosslinked through a nucleophilic substitution reaction without a separate crosslinking agent.

In the step (c), the poly(m-terphenyl N-alkyl piperidine) polymer is preferably used in an amount of 10 mol or more, 20 mol or more, 30 mol or more, or 40 mol or more, and 70 mol or less, 60 mol or less, or 50 mol or less based on 100 mol of the halogen groups contained in the poly(styrene-*b*-ethylene-*co*-butylene-*b*-styrene)-based polymer. When the molar ratio is satisfied, the prepared crosslinked polymer may have an appropriate ratio of first chain and second chain, and thus may exhibit excellent hydroxide ion conductivity and mechanical properties.

The reaction in step (c) may be performed at 40 to 60 °C for 10 to 16 hours, preferably at 45 to 55 °C for 11 to 13 hours. When the polymerization temperature is less than 40 °C or the reaction time is less than 10 hours, the crosslinking reaction between the polymers does not sufficiently occur, and thus the hydroxide ion conductivity may decrease, thereby reducing alkaline stability. Conversely, when the polymerization temperature exceeds 60 °C or the reaction time exceeds 16 hours, the degree of crosslinking between the polymers excessively increases, resulting in gelation of the crosslinked polymer solution.

Meanwhile, after the step (c), a step (d) of reacting the crosslinked copolymer with trimethylamine may be further included in order to convert all of the halogen groups remaining in the crosslinked copolymer into amine groups. The step (d) may be performed at 40 to 60 °C for 10 to 30 hours, and preferably at 45 to 55 °C for 20 to 30 hours.

As described above, since a halogen functional group is introduced into the SEBS main chain and reacted with the PmTP main chain containing an amine group to prepare a crosslinked copolymer in the present disclosure, SEBS and PmTP can be crosslinked quantitatively without side reactions, and the degree of crosslinking can be easily controlled by adjusting the amount of each main chain.

Further, according to the above method, the cross-linked copolymer can be prepared more simply with a high yield, thereby increasing the productivity of the process and reducing costs.

Hereinafter, the present invention will be described in more detail by the following examples. However, the following examples are only for exemplifying the present invention, and the scope of the present invention is not limited only to these.

## [Examples]

### <Materials>

Poly(styrene-b-ethylene-co-butylene-b-styrene) (SEBS, A1535H) with 57% styrene content was obtained from Kraton (Houston, TX, USA). m-Terphenyl (99%) and triethylsilane (98%) were obtained from Alfa-Aesar (Haverhill, MA, USA). 6-Bromohexanoyl chloride (97%), aluminum chloride (99%), and N-methyl-4-piperidone (97%) were purchased from Sigma-Aldrich (St. Louis, MO, USA). Trifluorometanesulfonic acid (98%) was obtained from TCI (Tokyo, Japan). Trifluoroacetic acid was purchased from Daejung Chemicals & Metals (Siheung-si, South Korea). All other chemicals were obtained from other commercial sources.

### <Identification of chemical structure of polymer>

The chemical structure of the polymer obtained in each step of the following examples was identified via $^1$H NMR spectroscopy and Fourier transform infrared (FTIR) spectroscopy. $^1$H NMR spectra were obtained using a 400 MHz NMR instrument (Agilent 400-MR) using $CDCl_3$ as a solvent. FTIR spectra were obtained using a PerkinElmer Spectrum Two ATR-FTIR spectrometer. Spectra were collected from 4000 to 400 $cm^{-1}$.

### Example 1: Fabrication of 30x-PmTP-SEBS (degree of crosslinking: 30%) membrane

(1) Synthesis of poly(m-terphenyl N-methylpiperidine) 2

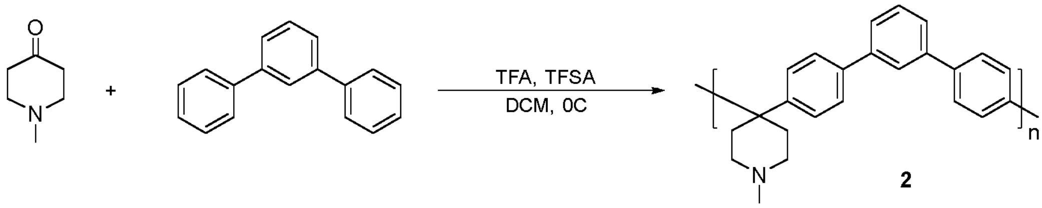


2

(In the above reaction formula, n is 158.)

m-Terphenyl (3.00 g, 13.03 mmol) and *N*-methyl-4-piperidone (1.92 g, 16.93 mmol) were poured into a completely dry 50-mL two-neck round bottom flask with a magnetic stirrer under a nitrogen atmosphere and then dissolved in dichloromethane (DCM, 15 mL). After the mixture was fully dissolved, the solution was cooled to 0 °C using an ice bath. Next, trifluoroacetic acid (TFA, 2.23 g, 19.54 mmol) and trifluoromethanesulfonic acid (TFSA, 19.56 g, 130.30 mmol) were slowly added to the solution with continuous stirring. The color of the solution changed from light brown to dark brown. After 48 h, the viscous solution was poured into a KOH solution (500 mL), and the precipitated polymer was filtered onto a filter paper and washed with deionized water several times to remove any residual reactants. The obtained polymer was dried in a vacuum oven for 24 h, and poly(m-terphenyl N-methyl piperidine) was obtained as a white fiber-like solid (4.13 g, 97.4%); $\delta_H$ (400 MHz, $CDCl_3$), 7.79-7.27 (12H, broad signal, $H_{1-5}$), 7.75-7.38 (8H, broad signal, $H_{6,7}$), 2.35-2.20 (3H, s, $H_8$) (FIG. 9).

(2) Synthesis of bromohexyl-SEBS 3

(2-1) Synthesis of bromohexanoyl SEBS 4

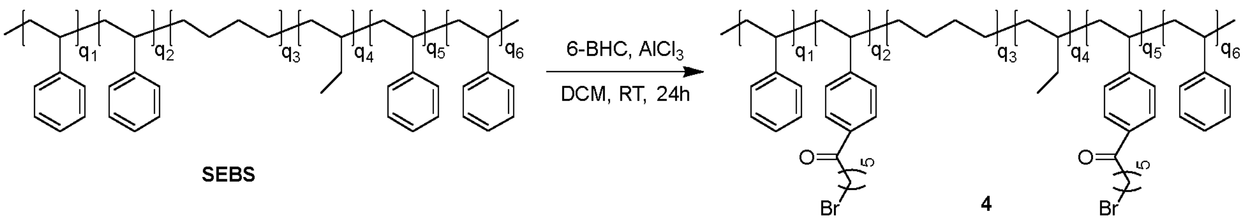


SEBS

4

(In the above reaction formula, the sum of $q_1$, $q_2$, $q_5$, and $q_6$ is 711, the sum of $q_3$ and $q_4$ is 996, and the ratio of the sum of $q_1$ and $q_6$ to the sum of $q_1$, $q_2$, $q_5$, and $q_6$ is 0.3.)

SEBS (5.00 g, 27.36 mmol) was poured into a 500-mL two-neck round bottom flask with a magnetic stirrer under a nitrogen atmosphere and then dissolved in dichloromethane (150 mL). After the polymer was fully dissolved, aluminum chloride (2.01 g, 15.06 mmol) and 6-bromohexanoyl chloride (3.21 g, 15.06 mmol) were added slowly to dichloromethane (50 mL). After 24 h, the reaction mixture was poured into a large amount of ethanol (1000 mL), and the precipitated polymer was filtered onto a filter paper and washed with ethanol several times to remove any residual reactants. The obtained polymer was dried in a desiccator at room temperature (25 °C) for 24 h, and this yielded bromohexanoyl SEBS 4 as a white rubbery product in which 70 mol% of the total 100 mol% of styrene had a bromohexanoyl functional group (8.20 g, 97.7%); $\delta_H$ (400 MHz, $CDCl_3$) 7.92-7.39 (4H, broad signal, $H_{6,7}$), 7.25-6.29 (10H, broad signal, $H_{8,9,10}$), 3.50-3.37 (3H, broad signal, $H_1$), 3.04-2.80 (3H, broad signal, $H_5$), 2.70-2.32 (2H, broad signal, $H_{12}$), 2.02-0.55 (46H, broad signal, $H_{2-4,11,13-18}$) (FIG. 10(b)); ATR-FTIR ($cm^{-1}$) 3026 (aromatic C-H stretching), 2922-2852 (alkane C-H stretching), 1680 (C=O stretching) (FIG. 11).

(2-2) Synthesis of bromohexyl SEBS 3

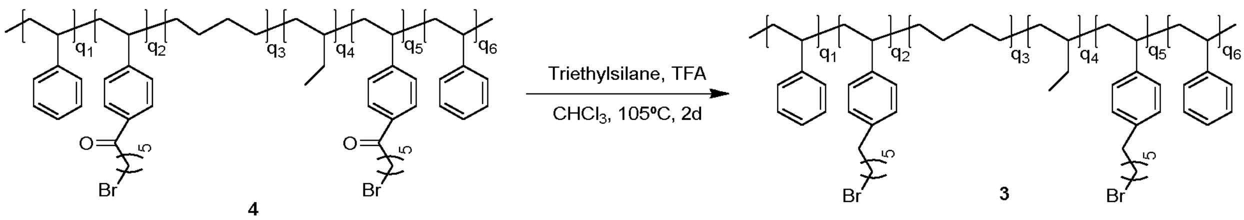


(In the above reaction formula, the sum of $q_1$, $q_2$, $q_5$, and $q_6$ is 711, the sum of $q_3$ and $q_4$ is 996, and the ratio of the sum of $q_1$ and $q_6$ to the sum of $q_1$, $q_2$, $q_5$, and $q_6$ is 0.3.)

Bromohexanoyl SEBS 4 (8.00 g, 14.74 mmol) was poured into a 500-mL two-neck round bottom flask connected to a reflux condenser and fitted with a magnetic stirrer under a nitrogen atmosphere and then dissolved in chloroform (200 mL). After the bromohexanoyl SEBS 4 was fully dissolved, triethyl silane (23.55 mL, 147.4 mmol) and trifluoroacetic acid (22.56 mL, 294.8 mmol) were added. The reaction mixture was slowly heated to 105 °C and was left for 48 h at this temperature. The reaction mixture was cooled to room temperature, and 1M KOH (200 mL) was added to neutralize the solution. The organic layer was poured into methanol (1000 mL), and the precipitated polymer was filtered onto a filter paper and washed with methanol several times to remove any residual reactants. The obtained polymer was dried in a desiccator at room temperature for 24 h, and bromohexyl SEBS 3 was obtained as a white rubbery product (7.66 g, 93.54%); $\delta_H$ (400 MHz, $CDCl_3$) 7.23-6.19 (12H, broad signal, $H_{6-10}$), 3.51-3.38 (3H, broad signal, $H_1$), 2.67-2.26 (5H, broad signal, $H_{5',12}$), 2.11-0.55 (47H, broad signal, $H_{2-5,11,13-18}$) (FIG. 10(c)); ATR-FTIR ($cm^{-1}$) 3024 (aromatic C-H stretching), 2922-2852 (alkane C-H stretching) (FIG. 11).

(3) Fabrication of crosslinked poly(m-terphenyl N-methyl piperidinium)-SEBS (x-PmTP-SEBS) 1 membrane

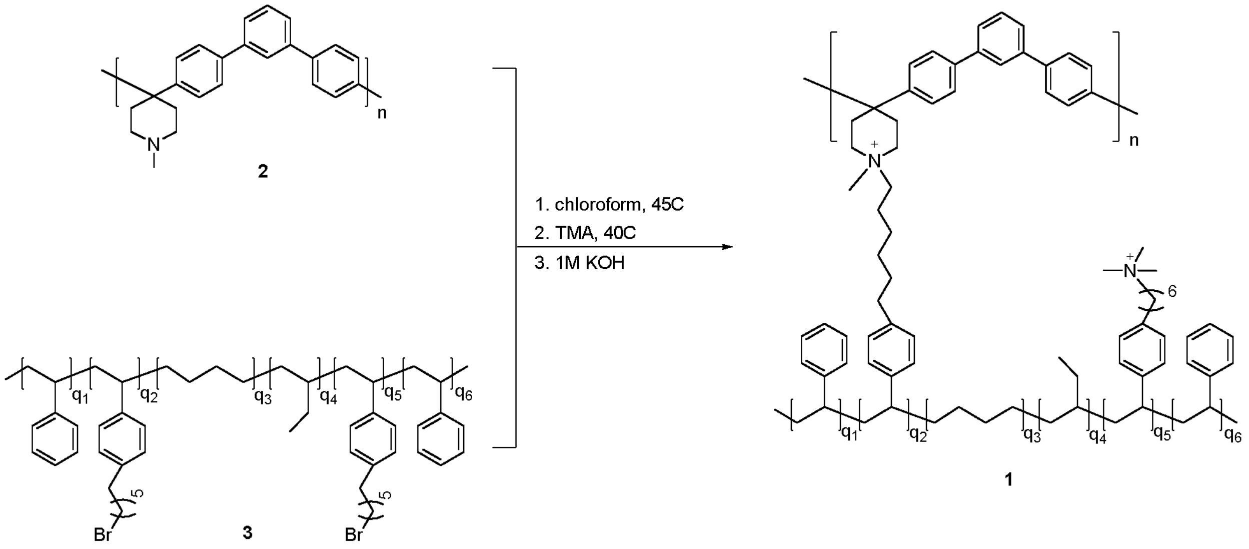


(In the above reaction formula, n is 158, the sum of $q_1$, $q_2$, $q_5$, and $q_6$ is 711, the sum of $q_3$ and $q_4$ is 996, and the ratio of the sum of $q_1$ and $q_6$ to the sum of $q_1$, $q_2$, $q_5$, and $q_6$ is 0.3.)

Poly(m-terphenyl N-methyl piperidine) 2, bromohexyl SEBS 3, and HPLC-grade chloroform (20 mL) were placed in 20 mL vials, and the mixture was stirred until the polymers were fully dissolved. The poly(m-terphenyl N-methyl piperidine) 2 was used at a ratio of 30 mol% relative to the bromohexyl SEBS 3. The polymer solution was heated at 45 °C overnight to induce crosslinking. The polymer solution was cooled to room temperature, filtered, and poured into a glass Petri dish before drying at room temperature for 24 h. The formed membrane was peeled from the Petri dish and immersed in deionized water to wash away residual solvent. The membrane was then soaked in a trimethylamine (TMA) solution at 40 °C for 24 h. Next, the membrane was washed with deionized (DI) water to get rid of TMA. Then, the membrane was immersed in 1 M KOH solution for at least 24 h at room temperature to exchange $Br^-$ and $OH^-$ ions. Finally, the membrane was washed with DI water several times before any measurements were performed.

**Example 2: Fabrication of 40x-PmTP-SEBS (degree of crosslinking: 40%) membrane**

A 40x-PBB-SEBS membrane was prepared in the same manner as in Example 1, except that poly(m-terphenyl N-methylpiperidine) 2 was used in an amount of 40 mol% relative to bromohexyl SEBS 3 in step (3).

**Example 3: Fabrication of 50x-PmTP-SEBS (degree of crosslinking: 50%) membrane**

A 50x-PBB-SEBS membrane was prepared in the same manner as in Example 1, except that poly(m-terphenyl N-methylpiperidine) 2 was used in an amount of 50 mol% relative to bromohexyl SEBS 3 in step (3).

Membranes in the form of a flexible film with a thickness of 35 to 40 μm were obtained in Examples 1 to 3. FIG. 12 shows photographs of the membranes prepared in Examples 1 to 3.

Through the FTIR spectra of 30x-PmTP-SEBS, 40x-PmTP-SEBS, and 50x-PmTP-SEBS of Examples 1 to 3, it was found that the characteristic peaks at 3000-2800 $cm^{-1}$ (aliphatic CH) and 1600-1800 $cm^{-1}$ (aromatic C=C) of the bromohexyl SEBS 3 decreased as the degree of crosslinking increased, suggesting the successful incorporation (FIG. 13).

**Experimental Example 1: Ion exchange capacity (IEC), water uptake (WU), swelling ratio (SR), density, and free volume**

**(1) Measurement of ion exchange capacity (IEC)**

a. Experimental IEC

The ion exchange capacity (IEC) of each membrane was measured using the back-titration method. The membranes in their $OH^-$ forms were kept for 24 h in a 0.01 M HCl standard solution. The residual HCl was back titrated with a 0.01 M NaOH standard solution, using a phenolphthalein indicator. The membranes were then dried to measure their weight ($W_{dry}$, g). The following equation was used to calculate the experimental IEC (meq $g^{-1}$) as the moles of

exchangeable hydroxide ion per gram:

$$IEC\ (meq\ g^{-1}) = (C_0V_0 - C_0V_x)/W_{dry}$$

wherein $V_0$ and $V_x$ are the volume of NaOH before the titration and the volume of NaOH consumed in the titration, respectively, $C_0$ is the concentration of NaOH used in the back titration, and $W_{dry}$ is the weight of the membrane after drying in an oven for at least 12 h.

b. Theoretical IEC

Theoretical IEC values were determined based on the number of Br atoms contained in bromohexyl SEBS 3, which was calculated from the $^1H$ NMR spectra, along with the masses of the two polymers (2 and 3) used in the crosslinking process.

**(2) Water uptake (WU) and swelling ratio (SR)**

The water uptake (WU, %) and swelling ratio (SR, %) of each membrane were calculated by soaking the circular membranes in water at 20 °C and 80 °C. The membranes in their $OH^-$ form were immersed in deionized water for at least 24 h, the surface of the membrane was wiped, and the weight ($W_{wet}$) and thickness ($T_{wet}$) were quickly measured. The membrane was dried under vacuum for 24 h, and the weight ($W_{dry}$), and thickness ($T_{dry}$) of the dry membrane were also taken. The following equations were used to determine the water uptake (%) and swelling ratio (%):

$$WU\ (\%) = (W_{wet}-W_{dry})/W_{dry} \times 100$$

$$SR\ (\%) = (L_{wet}-L_{dry})/L_{dry} \times 100 \text{ or } (T_{wet}-T_{dry})/T_{dry} \times 100$$

The hydration number (λ) of each membrane was calculated from the WU and the experimental IEC of each membrane. The following equation was used to determine the hydration number:

$$\text{Hydration number } (\lambda) = (\text{Water uptake } (\%) \times 1000)/(IEC \times 18)$$

**(3) Density**

The density of each membrane in its $Br^-$ form obtained after crosslinking of poly(m-terphenyl N-methylpiperidine) 2 and bromohexyl SEBS 3 and treatment with trimethylamine (i.e., membrane before ion exchange by KOH treatment) in step (3) of each example was measured using the following method.

Before the measurement, the membranes were dried in an oven at 40 °C for at least 24 h, and the density was measured with a buoyancy method using n-heptane (density = 0.684 $g\cdot cm^{-3}$) at room temperature. The following equation was used to determine the density ($g\cdot cm^{-3}$) of each membrane:

$$density\ (g\ cm^{-3}) = W_{air}/(W_{air}-W_{hep}) \times D_{hep}$$

wherein $W_{air}$ is the weight of the membrane in air, $W_{hep}$ is the weight of the membrane immersed in heptane, and $D_{hep}$ is the density of n-heptane, 0.684 g $cm^{-3}$.

**(4) Fractional free volume (FFV)**

The fractional free volume (FFV) is a dimensionless parameter that characterizes the volume not occupied by the polymer in a cell, and can be calculated using the Visualizer module of the Material studio package. The molecular surface can be calculated in three different ways, and in this disclosure, the van der Waals (vdW) surface, which is created by the surface intersecting the vdW radius of the atom, was obtained. The following equation was used to determine the fractional free volume:

$$FFV = (V_{sp}-1.3V_{vdW})/V_{sp}$$

wherein $V_{vdW}$ is the vdW volume calculated by the group contribution method, and 1.3 is the universal packing coefficient. $V_{sp}$ stands for the specific volume, which is defined as the reciprocal density.

**(5) Result**

The IEC, WU, SR, density, and FFV of the x-PmTP-SEBS membranes of Examples 1 to 3 were listed in Table 1 below.

[Table 1]

| | IEC (meq $g^{-1}$) | | WU (%) | | SR (%) | | Density | FFV |
|---|---|---|---|---|---|---|---|---|
| | The[a] | Exp[b] | 20°C | 80°C | 20°C (L) | 80°C (L) | | |
| 30x-PmTP-SEBS | 1.90 | 1.90 ±0.01 | 154.4 | 175.6 | 40.5 | 51.0 | 1.136 | 2.71 |
| 40x-PmTP-SEBS | 1.79 | 1.80 ±0.08 | 136.7 | 159.1 | 31.8 | 41.8 | 1.131 | 3.66 |
| 50x-PmTP-SEBS | 1.69 | 1.68 ±0.05 | 127.0 | 144.6 | 29.6 | 30.6 | 1.127 | 4.22 |

[a] Theoretical IEC values calculated based on $^{1}$H NMR spectra
[b] Experimental IEC values measured by back titration

The IEC is defined as the milliequivalent of ion-conducting groups per unit mass of a polymer electrolyte membrane. In general, the higher the IEC of a polymer electrolyte membrane is, the more water the membrane can contain. Since water can act as a medium for hydroxide ion conduction in an AEM, higher ionic conductivity is achieved when its IEC is higher. However, an excessively high IEC often leads to an increase in the WU, reducing the ionic conductivity via a mechanism called the "dilution effect". When this occurs, the SR of the membrane also increases, thereby degrading its mechanical properties. Therefore, for AEMs to have high ionic conductivity and good mechanical properties, their IEC needs to be appropriate.

The theoretical IECs of 30x-PmTP-SEBS, 40x-PmTP-SEBS, and 50x-PmTP-SEBS were calculated to be 1.90, 1.79, and 1.69 meq·$g^{-1}$, respectively, indicating that the IEC values decreased with increasing degree of crosslinking. This decrease was due to a decrease in the ratio of bromohexyl SEBS 3 relative to the total polymer mass, which acted as the main chain of the membrane. The experimental IEC values of x-PmTP-SEBS membranes were measured using the back-titration method. The results showed that, in all three membranes, the experimental IEC values were similar to their theoretical ones.

The WU and SR measurement results of the x-PmTP-SEBS membrane showed that the WU and SR decreased with the increased degree of crosslinking in all three membranes. The WU and SR values were higher when the degree of crosslinking was lower due to the intrinsic properties of SEBS as an elastic polymer. As the degree of crosslinking increases, the polymer chains form increasingly dense networks, leading to a decrease in WU and SR values. This phenomenon is commonly observed in typical crosslinked membranes. However, in the x-PmTP-SEBS membranes, the membranes showed higher WU (127% or more) with moderate SR compared to other SEBS-based crosslinked membranes.

Next, the density and FFV of the x-PmTP-SEBS membranes were measured. In general, an increase in the degree of crosslinking increases the polymer density while the FFV decreases. However, the x-PmTP-SEBS membranes developed in the present disclosure showed the opposite trend (i.e., the polymer density decreased [30x-PmTP-SEBS (1.136) > 40x-PmTP-SEBS (1.131) > 50x-PmTp-SEBS (1.127)]), while the FFV increased with increasing degree of crosslinking.

This behavior was attributed to the kinked structure of the m-terphenyl introduced into the polymer backbone, which suppressed the packing of the polymer chains while contributing to the increased FFV. This kinked geometry is believed to be the reason for the high WU of the x-PmTP-SEBS membranes, despite their crosslinked structure, as water can be effectively absorbed inside the kinked structure.

When calculating the hydration number ($\lambda$) relative to the IEC values of x-PmTP-SEBS membranes, the x-PmTP-SEBS membranes have higher hydration numbers (30xPmTP-SEBS: 45.2, 40x-PmTP-SEBS: 42.2 and 50x-PmTP-SEBS: 42.0) than other SEBS-based crosslinked membranes ([48] J. Membr. Sci. 599 (2020), 117829; [50] Eur. Polym. J. 154 (2021), 110528; [51] J. Polym. Sci. 58 (2020) 2181-2196; [52] Int. J. Hydrogen Energy 46 (2021) 36301-36313; [53] Int. J.Hydrogen Energy 45 (2020) 15658-15671), PP-based membranes ([3] Nat. Energy 4 (2019) 392-398; [4] Nat. Commun. 12 (2021) 2367; [6] Int. J. Hydrogen Energy 46 (2021) 18524-18533; [8] J. Mater. Chem. A. 9 (2021) 327-337; [36] Energy Environ.Sci. 13 (2020) 3633-3645), and the previously reported crosslinked PPO-SEBS membranes ([54] J. Mater. Chem. A. 9 (2021) 1062-1079) (FIG. 2a).

**Experimental Example 2: Mechanical and thermal properties**

**(1) Mechanical properties**

A benchtop tensile tester (Shimadzu EZ-TEST E2-L, Kyoto, Japan) was used to measure the mechanical properties of the membrane in its $OH^-$ form at a crosshead speed of 10 mm $min^{-1}$ at 25 °C under 50% relative humidity. The cross-sectional area of the sample in its initial state was used to determine the engineering stress. The initial slope of the stress-strain curve was used to calculate the Young's modulus. For this test, samples of each membrane were prepared in dumbbell shapes of 40 mm X 10 mm total area and 20 mm test area.

**(2) Thermal stability**

The thermal stability of the membranes was investigated by thermogravimetric analysis (TGA) using a Scinco TGA N-1000 instrument (Seoul, Korea). The TGA was operated at a heating rate of 10 °C $min^{-1}$ from 30-800 °C under a nitrogen atmosphere.

The glass transition temperature (TG) of each membrane was measured by differential scanning calorimetry (DSC) using a PerkinElmer DSC 4000 (Waltham, MA, USA). Samples were prepared in aluminum pans and measured from -40 to 200 °C for two cycles with heating and cooling rates of 10 °C $min^{-1}$. Tg was determined from the second heating cycle.

**(3) Result**

When employed in AEMFCs, an AEM serves not only as an electrolyte to conduct hydroxide ions but also as a separator between the cathode and anode to prevent the $H_2$ and $O_2$ fuel from moving from one electrode to the other. Thus, the mechanical and thermal stability of membranes is also an important factor to be considered for the commercialization of AEMFCs.

The mechanical properties of the x-PmTP-SEBS membranes were examined based on their stress-strain curves (FIG. 14 and Table 2). As expected, the stress (tensile strength) and Young's modulus of the membranes increased with increasing degree of crosslinking: 30xPmTP-SEBS (15.3 MPa and 91.4 MPa) < 40xPmTP-SEBS (18.9 MPa and 99.7 MPa) < 50xPmTP-SEBS (28.5MPa and 170.3MPa). These results confirmed that the crosslinking process contributed to improving the mechanical properties of the membranes. This improvement was attributed to the increased degree of crosslinking, which led to a decrease in the ratio of SEBS as an elastic polymer while increasing the relative ratio of the poly(m-terphenyl N-methyl piperidine) unit as a rigid polymer.

[Table 2]

| AEM | Tensile strength (MPa) | Elongation at break (%) | Young's modulus (MPa) | Ref |
|---|---|---|---|---|
| 30x-PmTP-SEBS | 15.4 | 148.3 | 91.4 | Example 1 |
| 40x-PmTP-SEBS | 18.9 | 118.5 | 99.7 | Example 2 |
| 50x-PmTP-SEBS | 28.5 | 165.4 | 170.3 | Example 3 |
| xTQA50-PPO-SEBS | 34.3 | 91.6 | 401.7 | [54] |
| SEBS-C16 | 8.45 | 716.3 | 16.1 | [51] |
| SEBS-C16-20C4 | 11.41 | 620.0 | 48.6 | [51] |
| 70C16-SEBS-TMHDA | 18.23 | 371.59 | - | [52] |
| HQA-SEBS | 8.8 | 237.9 | 26.4 | [47] |
| HQA-F5-SEBS | 21.7 | 306.5 | 63.9 | [47] |
| 75-QA-HQA-xSEBS | 14.9 | 45.7 | 90.0 | [53] |
| QMter-co-Mpi-100% | ≈ 11 | ≈ 24 | - | [38] |
| PAP-TP-85 | ≈ 67 | ≈ 117 | - | [3] |
| p-TPN1 | ≈ 25 | ≈ 16 | - | [34] |
| m-TPN1 | ≈ 30 | ≈ 33 | - | [34] |
| PDQA-3 | 6.8 | 11.8 | - | [8] |

(continued)

| AEM | Tensile strength (MPa) | Elongation at break (%) | Young's modulus (MPa) | Ref |
|---|---|---|---|---|
| O-PDQA-3 | 7.4 | 19.7 | - | [8] |
| PFTP-13 | 48.5 | 30.2 | - | [4] |
| m-p-MP-50 | 56.16 | 8.9 | - | [61] |
| m-PTP/TFPE-TQA-14 | ≈ 35 | ≈ 25 | - | [62] |

In addition, the mechanical properties of the x-PmTP-SEBS membranes were compared with those of other SEBS-based AEMs and PP-based AEMs ([54] J. Mater. Chem. A. 9 (2021) 1062-1079; [51] J. Polym. Sci. 58 (2020) 2181-2196; [52] Int. J. Hydrogen Energy 46 (2021) 36301-36313; [47] J. Membr. Sci. 643 (2022), 120029; [53] Int. J.Hydrogen Energy 45 (2020) 15658-15671; [38] J. Power Sources 480 (2020), 228805; [3] Nat. Energy 4 (2019) 392-398; [34] ACS Macro Lett. 6 (2017) 566-570; [8] J. Mater. Chem. A. 9 (2021)327-337; [4] Nat. Commun. 12 (2021) 2367; [61] Membranes 10 (2020) 1-16; [62] J. Membr. Sci. 598 (2020)) (Table 2 and FIG. 2b). The results confirmed that the membranes in which SEBS was crosslinked with rigid polymers exhibited higher tensile strength and Young's modulus (i.e., improved mechanical properties) than those in which SEBS or only SEBS components were crosslinked with each other. Further, x-PmTP-SEBS membranes crosslinked with SEBS exhibited much higher elongation properties (strain values) than the PP-based membranes including poly(terphenyl) and poly(biphenyl). These results strongly suggest that the mechanical properties of the membrane can be controlled by crosslinking two polymers with different properties, as suggested in this disclosure. In addition, the x-PmTP-SEBS membranes showed a higher strain than the previously developed crosslinked PPO-SEBS membrane, which is thought to be due to the plasticizer effect caused by the membrane absorbing more water in the free volume induced by the m-terphenyl structure.

Next, the thermal stability of the x-PmTP-SEBS membranes was determined using TGA and DSC. In the TGA results, the thermal degradation process occurred in three stages (FIG. 15). The first weight loss, observed in the temperature range below 100 °C, was attributed to the evaporation of the water contained in the membrane. The amount of water inside the membrane decreased with the increased degree of crosslinking, which was consistent with the WU results. The second weight loss occurred around 200 °C and was attributed to the decomposition of the conducting head groups, and this was finally followed by the degradation of the polymer backbones around 400 °C.

An analysis of the DTG graphs showed two peaks at 190 °C and 250 °C, corresponding to the degradation of the quaternary ammonium (QA) groups and the crosslinked piperidinium, respectively (FIG. 15a). In general, QA groups exhibit higher thermal stability, that is, higher degradation temperatures, when introduced into crosslinked structures compared to non-crosslinked structures. The current observation is consistent with this trend. Furthermore, in the DTG graphs, as the degree of crosslinking increased, the peak at 190 °C, which corresponds to the degradation of the QA groups, tended to decrease in intensity while the peak at 250 °C, which corresponds to the degradation of the crosslinked piperidinium, increased in intensity. These results confirmed that the amount of QA in the membrane decreased, and the amount of crosslinked piperidinium increased with the increased degree of crosslinking. The third weight loss, starting from around 400 °C, was attributed to the degradation of the polymer backbone.

Next, attempts were made to investigate the glass transition temperature (Tg) of each polymer, but, in the x-PmTP-SEBS membranes, no peaks were observed at temperatures up to 200 °C, at which the conducting head groups started to degrade (FIG. 15b). The typical Tg of SEBS is about 46 °C, but no Tg peak was observed for the x-PmTP-SEBS until the temperature reached the degradation temperature of ammonium around at 180 °C. This result confirmed that the introduction of the rigid poly(m-terphenyl N-methyl piperidine) unit combined with the crosslinking structure effectively enhanced the alignment between the polymer components, leading to an increase in the thermal stability of SEBS as a rubbery polymer.

These TGA and DSC results showed that the x-PmTP-SEBS membranes in which poly(m-terphenyl N-methyl piperidine) 2 and bromohexyl SEBS 3 were crosslinked with each other exhibited high thermal stability suitable for fuel cell operations.

**Experimental Example 3: Morphological analysis**

**(1) Measurement method**

The surface morphology of each membrane was analyzed using a scanning electron microscope (SEM, JEOL JSM-7800F, Tokyo, Japan) image with a Pt coating at an accelerating voltage of 15.0 kV. The microphase separation of the membranes was observed using atomic force microscopy (AFM, Bruker MULTIMODE-8-AM, Billerica, MA, USA). A high-resolution X-ray diffractometer (HR-XRD, SmartLab, Rigaku, Tokyo, Japan) was used to collect small-angle X-ray

diffraction scattering spectra of the membranes with a scanning rate of 0.2° $min^{-1}$ in a 2θ range from 0° to 5° with a Cu-Kα X-ray (λ = 1.54 Å). The membranes were thoroughly dried at 40 °C before any measurements.

**(2) Result**

First, the phase separation present in each membrane was confirmed by SEM. The images showed that the phase separation was more pronounced in 50-PmTP-SEBS when the degree of crosslinking was higher than in 30-PmTP-SEBS (FIG. 3a-3c). The reason that the phase separation becomes more pronounced with an increased degree of crosslinking is that the alignment of the polymer structure is affected by the degree of crosslinking. More specifically, when the degree of crosslinking is low, SEBS remains randomly crosslinked with poly(m-terphenyl N-methyl piperidine), and this structure makes it difficult for the SEBS components, which are highly prone to phase separation, to be well aligned, leading to a limited degree of phase separation. As the degree of crosslinking increases, however, bromohexyl SEBS becomes increasingly crosslinked with poly(m-terphenyl N-methyl piperidine), allowing better alignment of the polymer chains.

The AFM images of the x-PmTP-SEBS membranes further confirmed the phase separation, as the dark hydrophilic regions and the bright hydrophobic regions coexisted separately. In addition, the ionic clusters increased in size with the increased degree of crosslinking (FIG. 3d-3f) due to the increased degree of phase separation.

The SAXS analysis further confirmed that the q values decreased (i.e., the d-spacing increased) with the increased degree of crosslinking (FIG. 4). This decrease occurred because an increase in the degree of crosslinking facilitated the aggregation of the conducting groups while promoting phase separation between the hydrophilic-hydrophobic units, thus leading to increased ionic cluster size. This result was also consistent with the SEM and AFM results.

**Experimental Example 4: Water retention capacity**

**(1) Measurement method**

The freezing water and non-freezing water contents of the membranes were measured by DSC of their fully hydrated state using a PerkinElmer DSC 4000. A sample fully hydrated membrane was sealed in an aluminum pan, and a sealed empty aluminum pan was also prepared for use as a reference. Both pans were weighed and frozen to - 40 °C inside the DSC chamber. Then, the temperature was held constant while the system equilibrated. After that, the DSC chamber was heated to 20 °C at a heating rate of 2 °C $min^{-1}$. This cycle was repeated twice, and values were taken from the second heat cycle. The amount of freezing water in each membrane was calculated by integrating the peak area of the melt endotherm ($\Delta H_m$). The WU (%) of the membrane was used to determine the total water content. The freezing water and non-freezing water contents were calculated using the following equations:

$$\text{Freezing water (\%)} = [\text{melting enthalpy (J } g^{-1})]/[\text{melting endothermic heat of funsion of pure water (334 J } g^{-1})] \times 100$$

$$\text{Non-freezing water (\%)} = \text{total water (\%)} - \text{freezing water (\%)}$$

**(2) Result**

In AEMFCs, water acts as a medium to conduct hydroxide ions formed in the cathode to the anode. Thus, the water capacity of an AEM is important for characterizing its ion conduction ability. The water contained in a membrane can be generally divided into "free water" and "bound water". Free water does not actively interact with the ion-conducting head groups, and its freezing and boiling temperatures are comparable to those of normal water. In contrast, bound water has a strong interaction with ion-conducting head groups and thus exhibits lower freezing and higher boiling temperatures than free water. In previous studies, the bound water content more significantly affected the ionic conductivity of AEMs than that of free water. Given that fuel cells typically operate at 90%-95% RH rather than in water, that is, at 90%-95% hydrated $H_2$ and $O_2$, increasing the bound water content would improve the overall cell performance.

The water content of the x-PmTP-SEBS membranes was measured using TGA and DSC. In the TGA results, the weight loss observed below 100 °C was assumed to correspond to the evaporation of the free water, while the weight loss at 100 °C to 150 °C was assumed to be due to the evaporation of the bound water (FIG. 5a). This TGA-based water analysis method allows only qualitative analysis, not quantitative analysis, because each test membrane has variable WU. Thus, the results obtained from this approach were used only to determine how the free water and bound water contents varied relative to each other.

As the degree of crosslinking increased, the overall WU of the x-PmTP-SEBS membranes decreased, but the

bound water content increased (FIG. 5b). This was because the content of poly(m-terphenyl N-methyl piperidine) increased with the increased degree of crosslinking. More specifically, the kinked structure of the m-terphenyl unit within the poly(m-terphenyl N-methyl piperidine) increased the FFV of each membrane and thus enhanced its interaction with water. This result was consistent with the FFV analysis results (Table 1).

The state of water was further analyzed using DSC to examine the 'non-freezable water' and 'freezable water' (freezable free water and freezable bound water) content. In all three x-PmTP-SEBS membranes, the following peaks were observed: $T_{F1}$, which corresponds to the freezing temperature of free water, and $T_{F2}$, which corresponds to the freezing temperature of freezable bound water (dashed line, FIG. 16). In the case of non-freezable water, phase changes were not observed because this type of water strongly interacted with the ion-conducting head groups. Meanwhile, the peaks corresponding to free water and freezable bound water partly overlapped, and, thus, these two types of water were collectively treated as freezable water. Based on these results, the change in the DSC melting enthalpy ($\Delta H_m$) was calculated, and the ratios of freezable water and non-freezable water to the total water in each membrane were then determined (Table 3). As initially expected, the ratio of non-freezable water increased with the increased degree of crosslinking. This was attributed to the increased degree of crosslinking, leading to enhanced interactions between the ion-conducting head groups and water.

[Table 3]

| | Water uptake (%) | Ratio (%) [Freezable]/[total] | Ratio (%) [Non-freezable]/[total] |
|---|---|---|---|
| 30x-PmTP-SEBS | 154.4 | 23.16 | 76.84 |
| 40x-PmTP-SEBS | 136.7 | 9.85 | 90.15 |
| 50x-PmTP-SEBS | 127.0 | 7.64 | 92.36 |

To confirm this interpretation, further analysis was conducted on $T_{F2}$ (FIG. 16b). $T_{F2}$ shifted toward lower temperatures with an increasing degree of crosslinking (i.e., the interaction between the ion-conducting head groups and water became stronger). This agreed with the TGA results and confirmed that the introduction of crosslinking increased the bound water content. These results confirmed that introducing the poly (m-terphenyl N-methyl piperidine) unit successfully increased the bound water content due to its enhanced free volume, even without using a triazole group, as previously applied for the crosslinked PPO-SEBS containing a triazole group.

**Experimental Example 5: Hydroxide ion conductivity**

**(1) Measurement method**

The hydroxide ion conductivity ($\sigma$) of each membrane was measured using a four-probe impedance spectroscopy method using an AC impedance analyzer (SP-200, BioLogic SAS, Claix, France). The electrode systems were connected at frequencies from 100 mHz to 2 MHz. Rectangular samples were prepared with the dimensions 1 $\times$ 4 cm. The hydroxide ion conductivity was measured using the resistance (R) in deionized water from 20 °C to 80 °C. The hydroxide ion conductivity was calculated using the following equation:

$$\sigma = L/(R \times A)$$

wherein L is the distance between the reference electrodes and A is the cross-sectional area of the membrane.

**(2) Result**

In AEMFCs, AEMs conduct hydroxide ions and generate energy. Thus, the hydroxide ion conductivity of AEMs is one of the most important characteristics that determine the single cell performance. In the present disclosure, the hydroxide ion conductivity of the x-PmTP-SEBS AEMs was measured at 20-80 °C (FIG. 6 and Table 4). The results showed that the ionic conductivity of each membrane increased with the increased degree of crosslinking over the entire temperature range (FIG. 6a).

In an attempt to exclude the effect of the differences in IEC of each membrane on their ionic conductivity, the normalized conductivity was measured and compared. These results also showed that the ionic conductivity increased with the increased degree of crosslinking (FIG. 6b). In particular, 50x-PmTP-SEBS exhibited the highest ionic conductivity (56.31 mS/cm at 20 °C and 116.32 mS/cm at 80 °C) among the three membranes, despite its high degree of crosslinking and low IEC and WU. This was attributed to the increasing degree of crosslinking, allowing the membrane to have a well-established phase separated morphology while increasing its ionic cluster size and the ratio of bound water, as previously confirmed by the morphological analysis results using AFM, SEM, and XRD, as well as the water retention capacity measurements using TGA and DSC.

The normalized conductivities of the x-PmTP-SEBS membranes were further compared with those of several AEMs including the crosslinked PPO-SEBS AEMs previously developed and commercialized ([3] Nat. Energy 4 (2019) 392-398; [4] Nat. Commun. 12 (2021) 2367; [5] Adv. Funct. Mater. 28 (2018) 1-10; [6] Int. J. Hydrogen Energy 46 (2021) 18524-18533; [8] J. Mater. Chem. A. 9 (2021) 327-337; [9] J. Membr. Sci. 642 (2022), 119966; [36] Energy Environ. Sci. 13 (2020) 3633-3645; [37] J. Power Sources 487 (2021), 229429; [49] J. Membr. Sci. 644 (2022), 120109; [61] Membranes 10 (2020) 1-16) (FIG. 6b). The x-PmTP-SEBS membranes exhibited high ionic conductivity despite their low IEC values. This confirmed that the crosslinking of poly (m-terphenyl N-methyl piperidine) and bromohexyl SEBS had given these x-PmTP-SEBS membranes a very high level of ionic conduction efficiency for two reasons. The first is the good phase separation effect originating from the SEBS, a triblock copolymer, as confirmed by the morphological analysis. The second reason is the enhanced interaction between the ion-conducting head group and water, as confirmed by the bound water analysis using TGA and DSC, caused by the kinked structure of the poly(m-terphenyl N-methyl piperidine).

The normalized conductivity of the crosslinked x-PmTP-SEBS membranes is even higher than the previously reported crosslinked x-TQA-PPO-SEBS, which was made by crosslinking PPO and SEBS through triazole. This result suggests that increasing the bound water content with the introduction of the kinked poly(m-terphenyl N-methyl piperidine) structure was more effective than the introduction of the hydrogen bonding site of the triazole. Due to these combined effects, the 50xPmTP-SEBS showed excellent normalized conductivity of 33.52 mS $cm^{-1}$ at 20 °C.

The ionic conductivity of the crosslinked x-PmTP-SEBS membranes was further measured under the conditions of 95% room humidity (RH) and 60 °C, which are the fuel cell operating conditions in real-world applications. It was found that the RH conductivity increased with the increased degree of crosslinking, as with the ion conductivity in water (50xPmTP-SEBS: 32.44 mS $cm^{-1}$ > 40x-PmTP-SEBS: 30.73 mS $cm^{-1}$ > 30x-PmTP-SEBS: 28.58 mS $cm^{-1}$) (Table 4). This effect was attributed to the higher amount of the kinked m-terphenyl unit in the crosslinked x-PmTP-SEBS, as confirmed by the water state analyses, causing higher conductivity even under RH conditions for the membranes with higher crosslinking degrees.

[Table 4]

| | $OH^-$ conductivity (mS $cm^{-1}$) | | | | RH conductivity[a] (mS $cm^{-1}$) |
|---|---|---|---|---|---|
| | 20°C | 40°C | 60°C | 80°C | |
| 30x-PmTP-SEBS | 53.37 ± 0.03 | 72.50 ± 0.08 | 90.38 ± 0.10 | 106.70 ± 0.26 | 28.58 ± 0.13 |
| 40x-PmTP-SEBS | 54.92 ± 0.23 | 73.21 ± 0.01 | 90.85 ± 0.19 | 112.20 ± 0.44 | 30.73 ± 0.42 |
| 50x-PmTP-SEBS | 56.31 ± 0.11 | 75.57 ± 0.15 | 95.30 ± 0.11 | 116.32 ± 0.09 | 32.44 ± 0.24 |
| [a] measured at 95% RH and 60 °C | | | | | |

**Experimental Example 6: Alkaline stability**

(1) Measurement method

The membranes in their $OH^-$ form were soaked in 2M KOH solution at 80 °C for 600 h in order to evaluate their chemical stability by measuring the changes in IEC and conductivity. Before the measurements, each membrane was soaked in freshly prepared 1M KOH solution for at least 24 h at room temperature. After this period, the hydroxide ion conductivity of each membrane was measured in deionized water at 20 °C, and the IEC was measured by the back-titration method before and after each alkaline stability test, as previously described.

(2) Result

The alkaline stability test results of the x-PmTP-SEBS membranes are shown in FIG. 7.

All three membranes with different degrees of crosslinking exhibited excellent alkaline stability (conductivity and IEC retention over 99% for 600 h). It was also found that their alkaline stability further improved with the increased degree of crosslinking. The x-PmTP-SEBS membranes exhibit high alkaline stability because the two polymers that comprise them (i.e., poly(m-terphenyl N-methyl piperidine) and SEBS) were both aryl-ether free type polymers, which are highly resistant to the backbone degradation caused by hydroxide ions. The crosslinking of these two polymers also enhanced the chemical stability of the ion-conducting groups. As previously confirmed by the measurements of the water retention capacity, the increased degree of crosslinking caused an increase in the bound water content; this bound water then

surrounded the ion-conducting groups, causing a shielding effect and thus protecting them from the hydroxide ions' attacks. The combination of all these factors improved the alkaline stability of these membranes.

In addition, the alkaline stability of the x-PmTP-SEBS membranes developed in the present disclosure was further compared to some representative AEMs reported in the literature ([47] J. Membr. Sci. 643 (2022), 120029; [53] Int. J.Hydrogen Energy 45 (2020) 15658-15671; [66] Macromolecules 52 (2019) 2139-2147; [52] Int. J. Hydrogen Energy 46 (2021) 36301-36313; [48] J. Membr. Sci. 599 (2020), 117829; [50] Eur. Polym. J. 154 (2021), 110528; [55] J. Membr. Sci. 633 (2021), 119418; [6] Int. J. Hydrogen Energy 46 (2021) 18524-18533; [61] Membranes 10 (2020) 1-16; [8] J. Mater. Chem. A. 9 (2021) 327-337; [4] Nat. Commun. 12 (2021) 2367; [49] J. Membr. Sci. 644 (2022), 120109; [3] Nat. Energy 4 (2019) 392-398; [9] J. Membr. Sci. 642 (2022), 119966; [37] J. Power Sources 487 (2021), 229429; [46] Angew. Chem. Int. Ed. 61(2022) 1-8; [62] J. Membr. Sci. 598 (2020)) including the crosslinked PPO-SEBS (xTQA50-PPO-SEBS, [54] J. Mater. Chem. A. 9 (2021) 1062-1079) previously developed, by comparing the percentage of conductivity remaining after the stability test (Table 5). It was found that all the x-PmTP-SEBS membranes showed higher remaining conductivity values (i.e., higher stability) than the PP- and SEBS-based AEMs.

[Table 5]

| Sample name | Backbone | Cation | Conditions | | | Remaining (%) | Ref |
|---|---|---|---|---|---|---|---|
| | | | Conc. (M) | Temp. (°C) | Time (h) | | |
| 30x-PmTP-SEBS | x-PmTP-SEBS | [a]QA, [a]Pip | 2 | 80 | 600 | Over 99.0 (99.07) | Example 1 |
| 40x-PmTP-SEBS | x-PmTP-SEBS | [a]QA, [a]Pip | 2 | 80 | 600 | Over 99.0 (100.07) | Example 2 |
| 50x-PmTP-SEBS | x-PmTP-SEBS | [a]QA, [a]Pip | 2 | 80 | 600 | Over 99.0 (99.46) | Example 3 |
| xTQA50-PPO-SEBS | x-PPO-SEBS | [a]QA | 1 | 80 | 500 | 94.4 | [54] |
| HQA-SEBS | SEBS | [a]QA | 1 | 80 | 500 | 88.7 | [47] |
| HQA-F5-SEBS | SEBS | [a]QA | 1 | 80 | 500 | 96.6 | [47] |
| 75-QA-HQA-xSEBS | x-SEBS | [a]QA | 3 | 80 | 504 | 79.7 | [53] |
| XL100-SEBS-Cs-TMA-0.8 | x-SEBS | [a]QA | 1 | 60 | 500 | 97.6 | [66] |
| 70C16-SEBS-TMHDA | x-SEBS | [a]QA | 2 | 60 | 1700 | 92.8 | [52] |
| 70C16-SEBS | SEBS | [a]QA | 2 | 60 | 1700 | 78.0 | [52] |
| HQA-C12-SEBS | SEBS | [a]QA | 1 | 60 | 270 | 91.3 | [48] |
| SEBSC1-Pip | SEBS | [a]Pip | 1 | 80 | 600 | 79.0 | [50] |
| M-2# | x-PS-PES | [a]QA | 1 | 80 | 600 | <85 | [55] |
| m-PTP-Q1 | PmTP | [a]Pip | 2 | 80 | 1600 | 81.4 | [6] |
| m-PTP-20Q4 | x-PmTP | [a]QA, [a]Pip | 2 | 80 | 1600 | 87.6 | [6] |
| m-p-MP-50 | PmTP-co-PpTP | [a]Pip | 1 | 80 | 500 | 96.4 | [61] |
| O-PDQA-3 | PBP | [a]Pip | 2 | 80 | 1080 | 97.2 | [8] |
| PDQA-3 | PBP | [a]Pip | 2 | 80 | 1080 | 94.9 | [8] |
| PFTP-13 | PFN-co-PpTP | [a]Pip | 1 | 80 | 2000 | 97.0 | [4] |
| PFTP-13 | PFN-co-PpTP | [a]Pip | 5 | 80 | 2000 | 78.0 | [4] |
| s-PDTP-54 | PBB-co-PpTP | [a]QA, [a]Pip | 1 | 80 | 1000 | 89.2 | [49] |

(continued)

| Sample name | Backbone | Cation | Conditions | | | Remaining (%) | Ref |
|---|---|---|---|---|---|---|---|
| | | | Conc. (M) | Temp. (°C) | Time (h) | | |
| PAP-TP-85 | PpTP | [a]Pip | 1 | 100 | 2000 | 97 | [3] |
| PQP-100 | PpQP | [a]Pip | 1 | 80 | 1344 | 75 | [9] |
| PAP-OH-8% | PBP | [a]Pip | 5 | 80 | 720 | 89.2 | [37] |
| b-PTP-2.5 | b-PpTP | [a]Pip | 1 | 80 | 1500 | 100 | [46] |
| b-PTP-2.5 | b-PpTP | [a]Pip | 3 | 80 | 1500 | 83 | [46] |
| m-PTP/TFPE-TQA-14 | Comp-PmTP-TFPE | [a]Pip | 2 | 80 | 1500 | 88.3 | [62] |
| [a]QA = quaternary ammonium, Pip=piperidinium | | | | | | | |

**Experimental Example 7: Fabrication of membrane electrode assemblies (MEAs) and single cell measurements**

**(1) Measurement method**

A single cell test was conducted as follows. First, the catalyst inks were prepared using a catalyst mixture of 0.3 mg $cm^{-1}$ Pt/C (46.2 wt%, Tanaka Kikinzoku Kogyo-TKK, Tokyo, Japan) for the cathode and 0.4 mg $cm^{-2}$ of PtRu/C (HiSpec 10000, Johnson Matthey, London, UK) for the anode with a deionized water, 2-propanol, and 10 wt% FAA-3 ionomer solution. Then, the catalyst inks were coated onto the surface of the prepared membrane using an air spray gun, followed by immersion in 1 M KOH solution for 3 h to make the catalyst-coated membrane (CCM). The CCM was sandwiched between 39BB gas diffusion layers (GDL, Sigracet, SGL Carbon, Wiesbaden, Germany) and Teflon gaskets with a 5 $cm^2$ effective electrode area to fabricate the membrane electrode assembly (MEA). $H_2$ and $O_2$ were fed into the cell at flow rates of 0.6 L $min^{-1}$ and 0.8 L $min^{-1}$, respectively, while the fuel cell test was performed at 60 °C under 95% RH. Then, the polarization curve was measured at a scan rate of 50 mA $s^{-1}$.

**(2) Result**

The x-PmTP-SEBS membranes developed in the present disclosure exhibited excellent physicochemical stability, well-established phase separated morphology, and high conductivity in water and under real RH conditions. Single cell tests were then conducted using these x-PmTP-SEBS membranes at 60 °C and 95% RH.

The results showed that the peak power density and current density (at 0.6 V) of these membranes increased with increasing degree of crosslinking: 50x-PmTP-SEBS (592 mW $cm^{-2}$ and 1156 mA $cm^{-2}$) > 40x-PmTP-SEBS (496 mW $cm^{-2}$ and 926 mA $cm^{-2}$) > 30x-PmTP-SEBS (391 mW $cm^{-2}$ and 737 mA $cm^{-2}$) (FIG. 8a). This result was consistent with the trend observed in the conductivity measurement results (both in water and real RH conditions).

The 50x-PmTP-SEBS membrane, which had the best cell performance, was subjected to further tests at 0.1 MPa of backpressure. As a result, a somewhat improved cell performance was achieved: 50xPmTP-SEBS (642 mW $cm^{-2}$ and 1315 mA $cm^{-2}$) (FIG. 8b), suggesting that the cell performance can still be further optimized.

The cell performance of the 50x-PmTP-SEBS membrane was compared with those of other SEBS-based AEMs ([47] J. Membr. Sci. 643 (2022), 120029; [48] J. Membr. Sci. 599 (2020), 117829; [51] J. Polym. Sci. 58 (2020) 2181-2196; [53] Int. J.Hydrogen Energy 45 (2020) 15658-15671; [66] Macromolecules 52 (2019) 2139-2147) or PP-based AEMs ([3] Nat. Energy 4 (2019) 392-398; [6] Int. J. Hydrogen Energy 46 (2021) 18524-18533; [8] J. Mater. Chem. A. 9 (2021) 327-337; [34] ACS Macro Lett. 6 (2017) 566-570; [67] J. Membr. Sci. 588 (2019), 117120; [68] Int. J. Hydrogen Energy 44 (2019) 24954-24964) reported in previous studies (FIG. 17). The single cell operations involve a range of factors, such as flow rate, backpressure, RH conditions, cell operating temperatures, catalysts, and ionomers, and thus it is difficult to directly compare the cell performances measured under different conditions. However, the 50x-PmTP-SEBS membrane, in which poly(m-terphenyl N-methyl piperidine) and bromohexyl SEBS were crosslinked with each other, was found to exhibit relatively high peak power density, even though the measurement was conducted at relatively low $H_2/O_2$ flow rates (0.6/0.8 L/min, respectively) and low temperatures (60 °C). This result was attributed to the phase-separated morphology and high water retention capacity of the x-PmTP-SEBS AEMs, allowing these membranes to provide high hydroxide ion conductivity and excellent cell performance even when used in actual fuel cells.

## Conclusion

The poly(m-terphenyl N-methyl piperidinium)-SEBS (x-PmTP-SEBS) membranes according to one embodiment of the present disclosure showed higher tensile strength (15 MPa or more) and Young's modulus (91 MPa or more) than those of the crosslinked SEBS membranes. Further, the x-PmTP-SEBS membranes exhibited much higher elongation properties (elongation at break of 118% or more) than the typical PP-based membranes.

In addition, the x-PmTP-SEBS membranes showed high dimensional stability with SR of around 30% despite their high WU (127% or more at 20 °C).

In addition, the x-PmTP-SEBS membranes according to one embodiment of the present disclosure exhibited a high capacity for holding water and high hydration number ($\lambda > 42$) due to both the well-separated morphology originating from the triblock structure of SEBS and the free volume induced by the kinked structure of the m-terphenyl. As a result, these membranes exhibited excellent normalized conductivity and good cell performance. In particular, the 50x-PmTP-SEBS membranes with 50% crosslinking degree showed a high conductivity of 116 mS $cm^{-1}$ at 80 °C in water and 32 mS $cm^{-1}$ at 60 °C and 95% RH, even with an IEC of only 1.68meq $g^{-1}$, together with a high peak power density of 642 mW $cm^{-2}$ with $H_2/O_2$ gas flow at 60 °C and 95% RH conditions.

Moreover, all the crosslinked x-PmTP-SEBS membranes based on aryl-ether free polymer backbones showed excellent alkaline stability (99% or more of ion conductivity and IEC remained even in 2 M KOH at 80 °C for 600 h), excelling the typical AEMs reported in the literature due to the shielding effect originating from their high hydration numbers.

From these results, it was confirmed that the polymer membranes including the crosslinked copolymer according to one embodiment of the present disclosure had excellent mechanical properties and excellent physicochemical and electrical properties. In addition, it was confirmed that the above properties of the polymer membranes including the crosslinked copolymer can be controlled by adjusting the degree of crosslinking of the crosslinked copolymer.

Further, it was confirmed that the polymer membrane exhibited stable and excellent electrochemical properties, such as exhibiting excellent ionic conductivity while having an appropriate IEC. From these results, it can be seen that AEMs with excellent performance can be developed through the strategy used in the present disclosure instead of the strategy of increasing the IEC of the polymer.

## Claims

1. A crosslinked copolymer comprising a first chain represented by the following Chemical Formula 1 and a second chain represented by the following Chemical Formula 2, wherein the first chain and the second chain are crosslinked with each other:

[Chemical Formula 1]

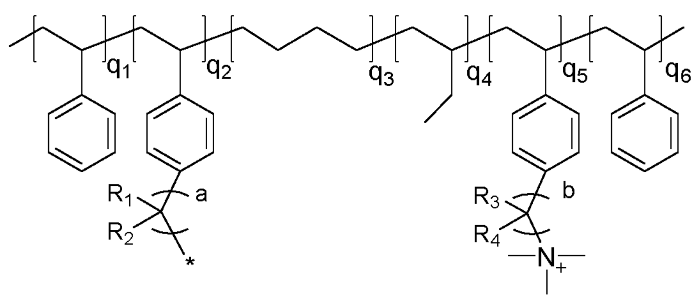

in Chemical Formula 1,
* is a bonding position with Chemical Formula 2,
a sum of $q_1$, $q_2$, $q_5$, and $q_6$ is an integer of 100 to 1,000,
a sum of $q_3$ and $q_4$ is an integer of 150 to 2,000,
a and b are each independently an integer of 3 to 10, and
$R_1$ to $R_4$ are each independently hydrogen or $-(CH_2)_p-CH_3$, wherein p is an integer of 0 to 5,

[Chemical Formula 2]

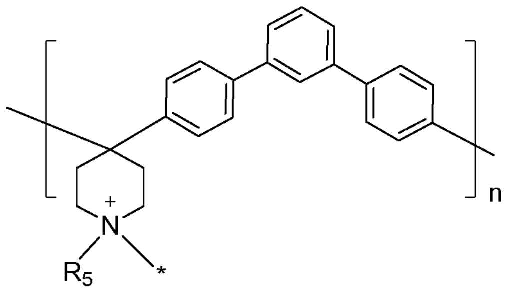

in Chemical Formula 2,
* is a bonding position with Chemical Formula 1,
$R_5$ is $-(CH_2)_{p'}-CH_3$, wherein p' is an integer of 0 to 5, and
n is an integer of 10 to 1000.

2. The crosslinked copolymer of Claim 1,
wherein 10 to 70 mol of the second chain is included based on 100 mol of the first chain.

3. The crosslinked copolymer of Claim 1,
wherein $q_1$ to $q_6$ are each independently an integer of 10 to 500.

4. The crosslinked copolymer of Claim 1,
wherein a ratio of the sum of $q_1$, $q_2$, $q_5$, and $q_6$ to the sum of $q_1$ to $q_6$ is 0.2 to 0.5.

5. The crosslinked copolymer of Claim 1,
wherein a ratio of the sum of $q_1$ to $q_6$ to the sum of $q_1$, $q_2$, $q_5$, and $q_6$ is 0.2 to 0.5.

6. The crosslinked copolymer of Claim 1,
wherein a and b are each independently an integer of 4 to 6.

7. The crosslinked copolymer of Claim 1,

wherein the crosslinked copolymer is represented by the following Chemical Formula 3:

[Chemical Formula 3]

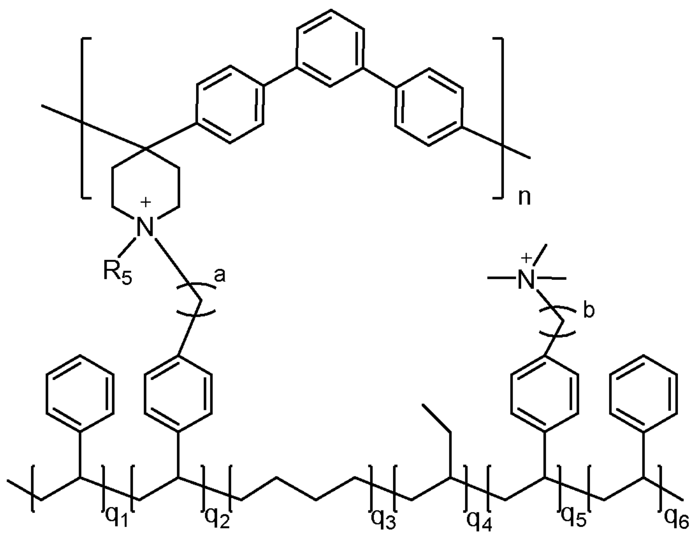

in Chemical Formula 3, $q_1$ to $q_6$, a, b, and n are as defined in the Chemical Formulae 1 and 2.

**8.** A polymer membrane comprising the crosslinked copolymer of any one of Claims 1 to 7.

**9.** The polymer membrane of Claim 8, wherein the polymer membrane is an anion exchange membrane.

**10.** A method for preparing a crosslinked copolymer comprising the steps of

(a) preparing a poly(styrene-b-ethylene-co-butylene-b-styrene)-based polymer represented by the following Chemical Formula 1-1;
(b) preparing a poly(m-terphenyl N-alkyl piperidine) polymer represented by the following Chemical Formula 2-1; and
(c) preparing a crosslinked copolymer by crosslinking the poly(styrene-b-ethylene-co-butylene-b-styrene)-based polymer and the poly(m-terphenyl N-methyl piperidine) polymer:

[Chemical Formula 1-1]

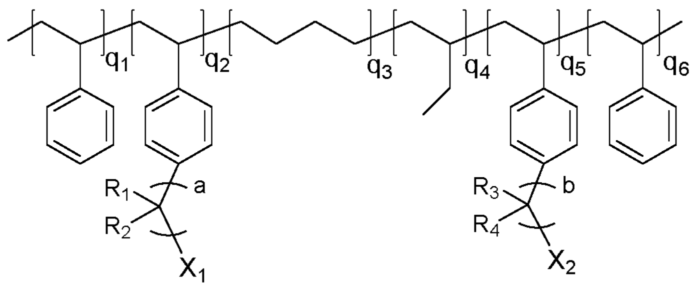

in Chemical Formula 1-1,
a sum of $q_1$, $q_2$, $q_5$, and $q_6$ is an integer of 100 to 1,000,
a sum of $q_3$ and $q_4$ is an integer of 150 to 2,000,
a and b are each independently an integer of 3 to 10, and
$R_1$ to $R_4$ are each independently hydrogen or $-(CH_2)_p-CH_3$, wherein p is an integer of 0 to 5, and
$X_1$ and $X_2$ are each independently a halogen group,

[Chemical Formula 2-1]

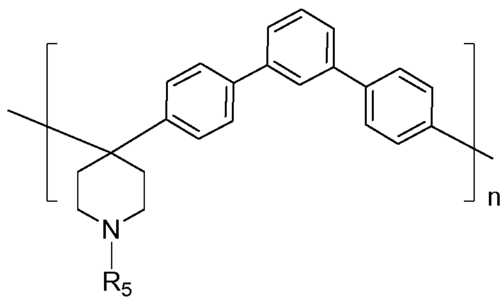

in Chemical Formula 2-1,
$R_5$ is $-(CH_2)_{p'}-CH_3$, wherein p' is an integer of 0 to 5, and
n is an integer of 10 to 1000.

**11.** The method for preparing a crosslinked copolymer of Claim 10, further comprising a step (d) of reacting the crosslinked copolymer with trimethylamine.

**12.** The method for preparing a crosslinked copolymer of Claim 10, wherein the poly(styrene-b-ethylene-co-butylene-b-styrene)-based polymer contains 30 to 90 mol of halogen groups based on 100 mol of styrene repeating units.

**13.** The method for preparing a crosslinked copolymer of Claim 10, wherein the poly(m-terphenyl N-alkyl piperidine) polymer is used in an amount of 10 to 70 mol based on 100 mol of the halogen groups contained in the poly(styrene-b-ethylene-co-butylene-b-styrene)-based polymer in the step (c).

【FIG. 1】

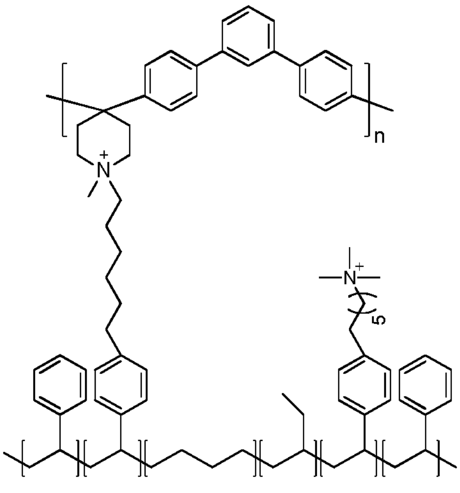

**1**

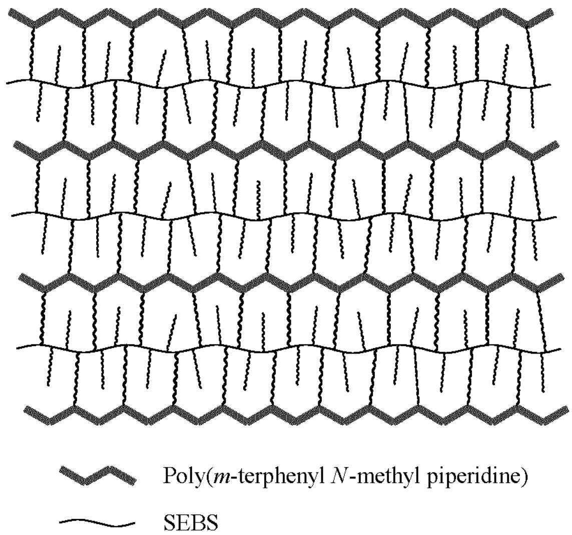

【FIG. 2】

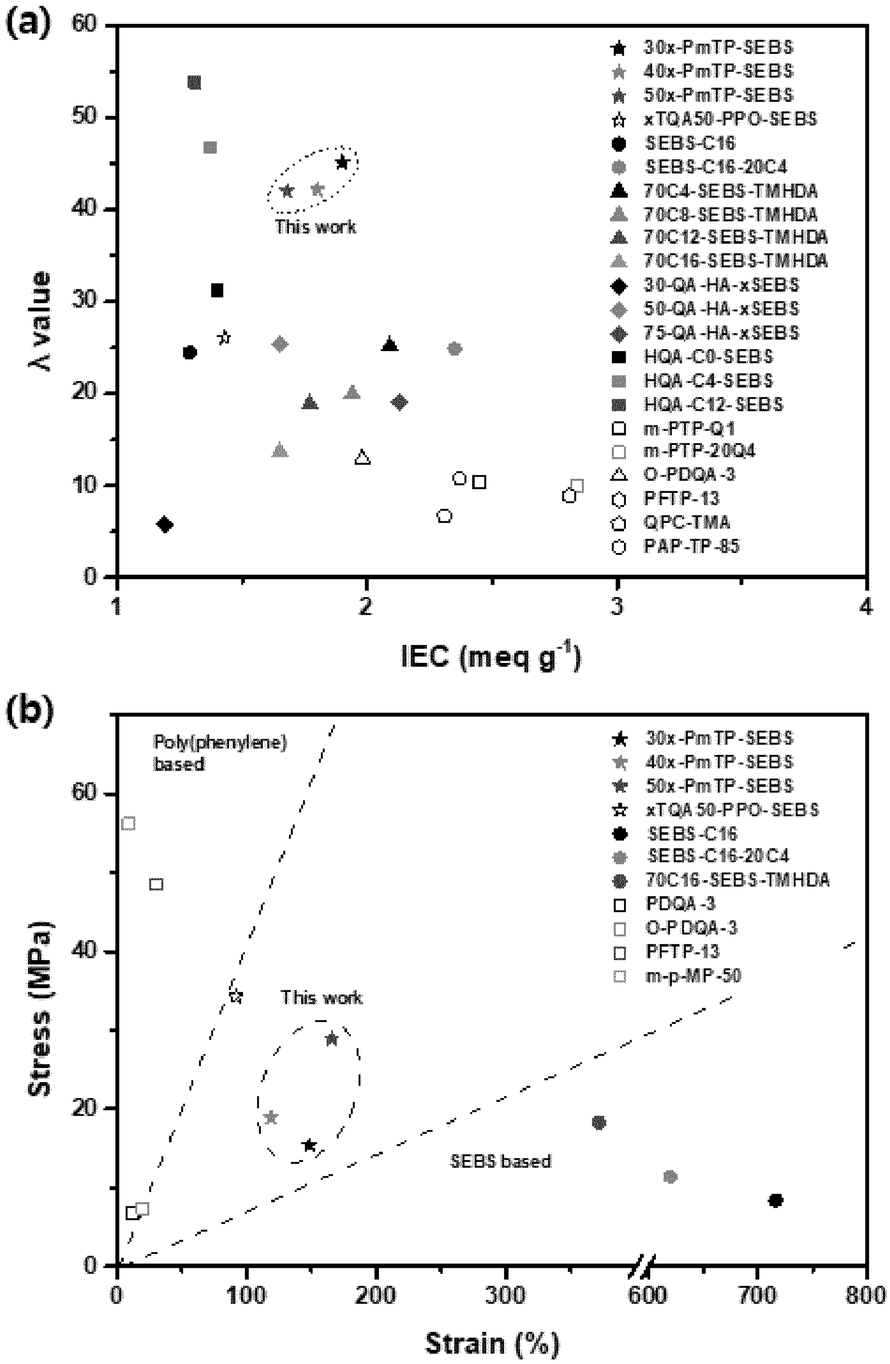
(a)
λ value
IEC (meq g-1)
This work
30x-PmTP-SEBS
40x-PmTP-SEBS
50x-PmTP-SEBS
xTQA50-PPO-SEBS
SEBS-C16
SEBS-C16-20C4
70C4-SEBS-TMHDA
70C8-SEBS-TMHDA
70C12-SEBS-TMHDA
70C16-SEBS-TMHDA
30-QA-HA-xSEBS
50-QA-HA-xSEBS
75-QA-HA-xSEBS
HQA-C0-SEBS
HQA-C4-SEBS
HQA-C12-SEBS
m-PTP-Q1
m-PTP-20Q4
O-PDQA-3
PFTP-13
QPC-TMA
PAP-TP-85
(b)
Stress (MPa)
Strain (%)
Poly(phenylene) based
This work
SEBS based
30x-PmTP-SEBS
40x-PmTP-SEBS
50x-PmTP-SEBS
xTQA50-PPO-SEBS
SEBS-C16
SEBS-C16-20C4
70C16-SEBS-TMHDA
PDQA-3
O-PDQA-3
PFTP-13
m-p-MP-50

【FIG. 3】

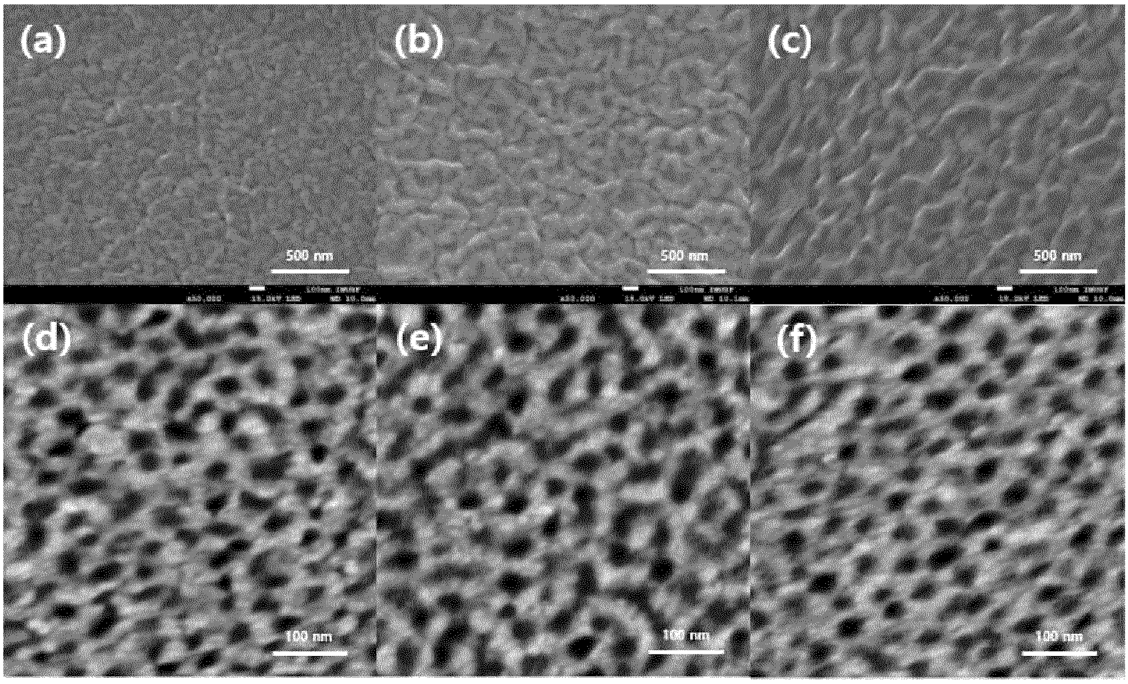

【FIG. 4】

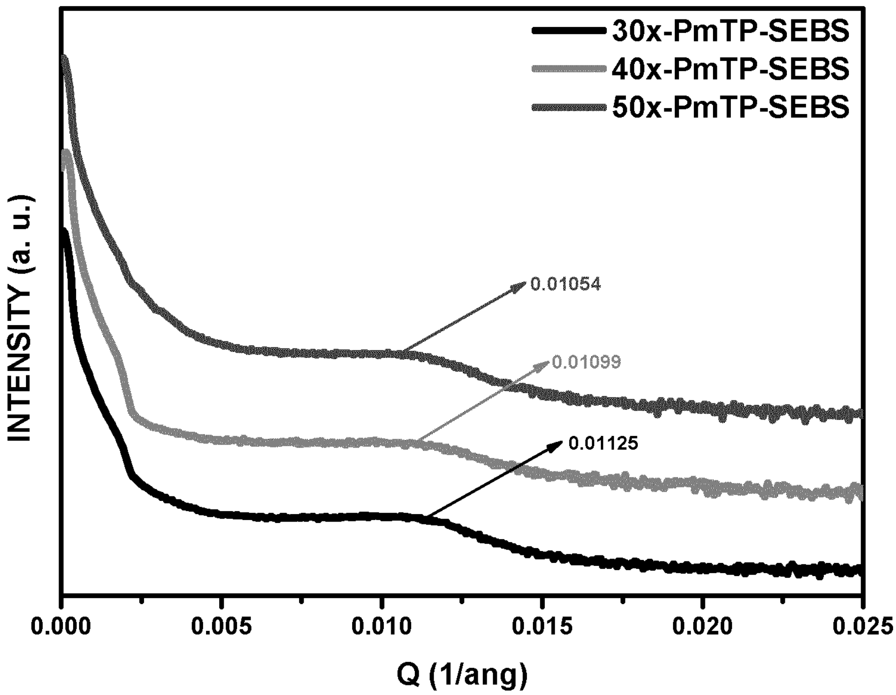
30x-PmTP-SEBS
40x-PmTP-SEBS
50x-PmTP-SEBS
INTENSITY (a. u.)
0.01054
0.01099
0.01125
0.000
0.005
0.010
0.015
0.020
0.025
Q (1/ang)

【FIG. 5】

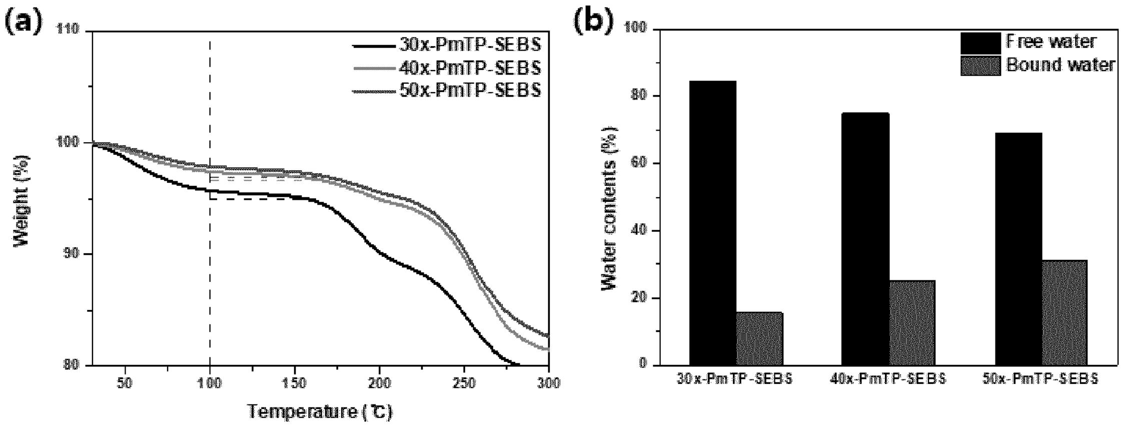
(a)
30x-PmTP-SEBS
40x-PmTP-SEBS
50x-PmTP-SEBS
Weight (%)
Temperature (℃)
(b)
Free water
Bound water
Water contents (%)
30x-PmTP-SEBS
40x-PmTP-SEBS
50x-PmTP-SEBS

【FIG. 6】

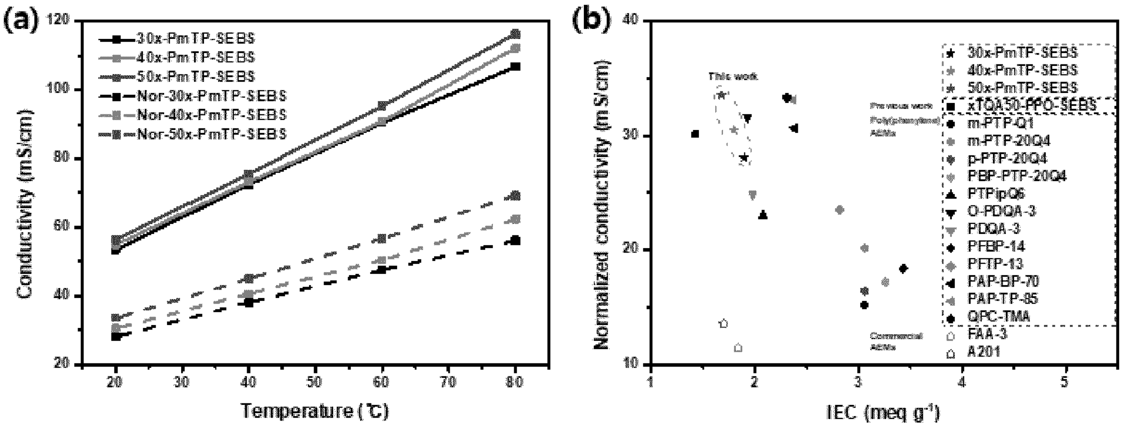
(a)
30x-PmTP-SEBS
40x-PmTP-SEBS
50x-PmTP-SEBS
Nor-30x-PmTP-SEBS
Nor-40x-PmTP-SEBS
Nor-50x-PmTP-SEBS
Conductivity (mS/cm)
Temperature (℃)
(b)
This work
Previous work
Poly(phenylene) AEMs
Commercial AEMs
30x-PmTP-SEBS
40x-PmTP-SEBS
50x-PmTP-SEBS
xTQA50-PPO-SEBS
m-PTP-Q1
m-PTP-20Q4
p-PTP-20Q4
PBP-PTP-20Q4
PTPipQ6
O-PDQA-3
PDQA-3
PFBP-14
PFTP-13
PAP-BP-70
PAP-TP-85
QPC-TMA
FAA-3
A201
Normalized conductivity (mS/cm)
IEC (meq g⁻¹)

【FIG. 7】

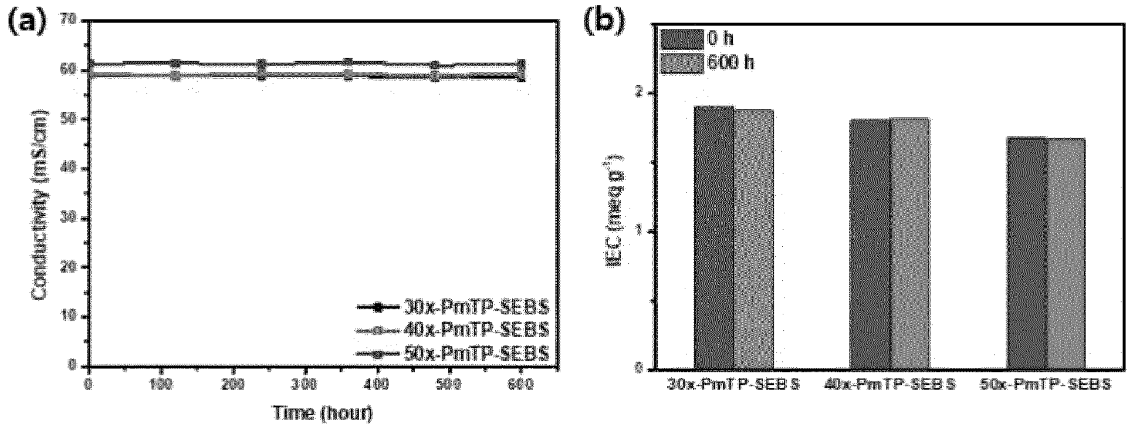
(a)
Conductivity (mS/cm)
30x-PmTP-SEBS
40x-PmTP-SEBS
50x-PmTP-SEBS
Time (hour)
(b)
0 h
600 h
IEC (meq g⁻¹)
30x-PmTP-SEBS
40x-PmTP-SEBS
50x-PmTP-SEBS

【FIG. 8】

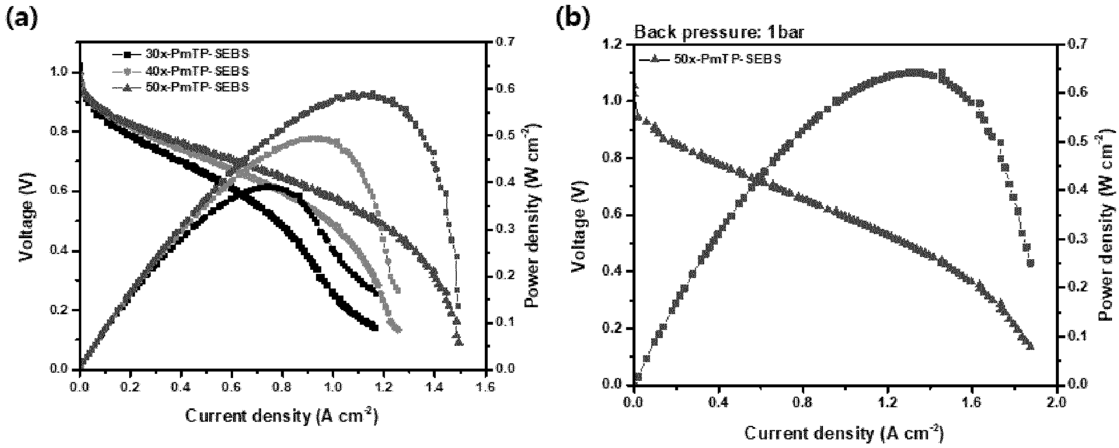
(a)
30x-PmTP-SEBS
40x-PmTP-SEBS
50x-PmTP-SEBS
Voltage (V)
Power density (W cm$^{-2}$)
Current density (A cm$^{-2}$)
(b)
Back pressure: 1bar
50x-PmTP-SEBS
Voltage (V)
Power density (W cm$^{-2}$)
Current density (A cm$^{-2}$)

【FIG. 9】

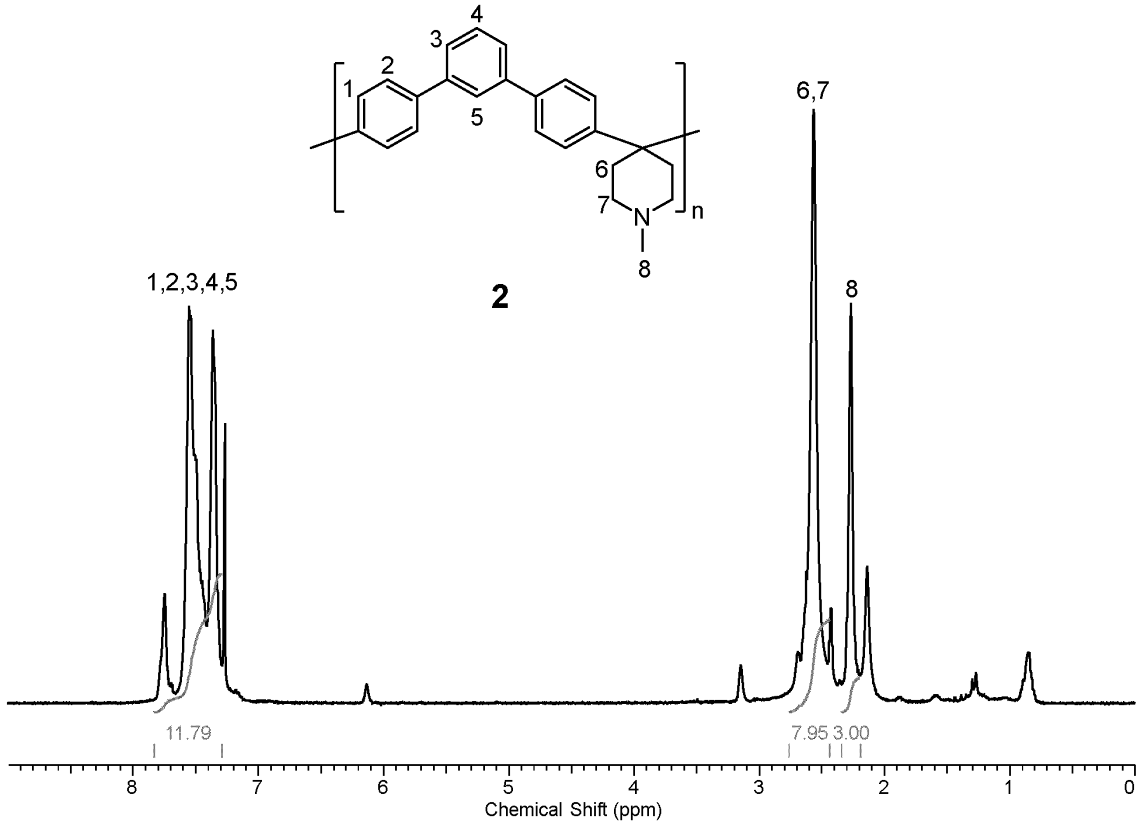
1,2,3,4,5
6,7
8
11.79
7.95
3.00
Chemical Shift (ppm)

2

【FIG. 10】

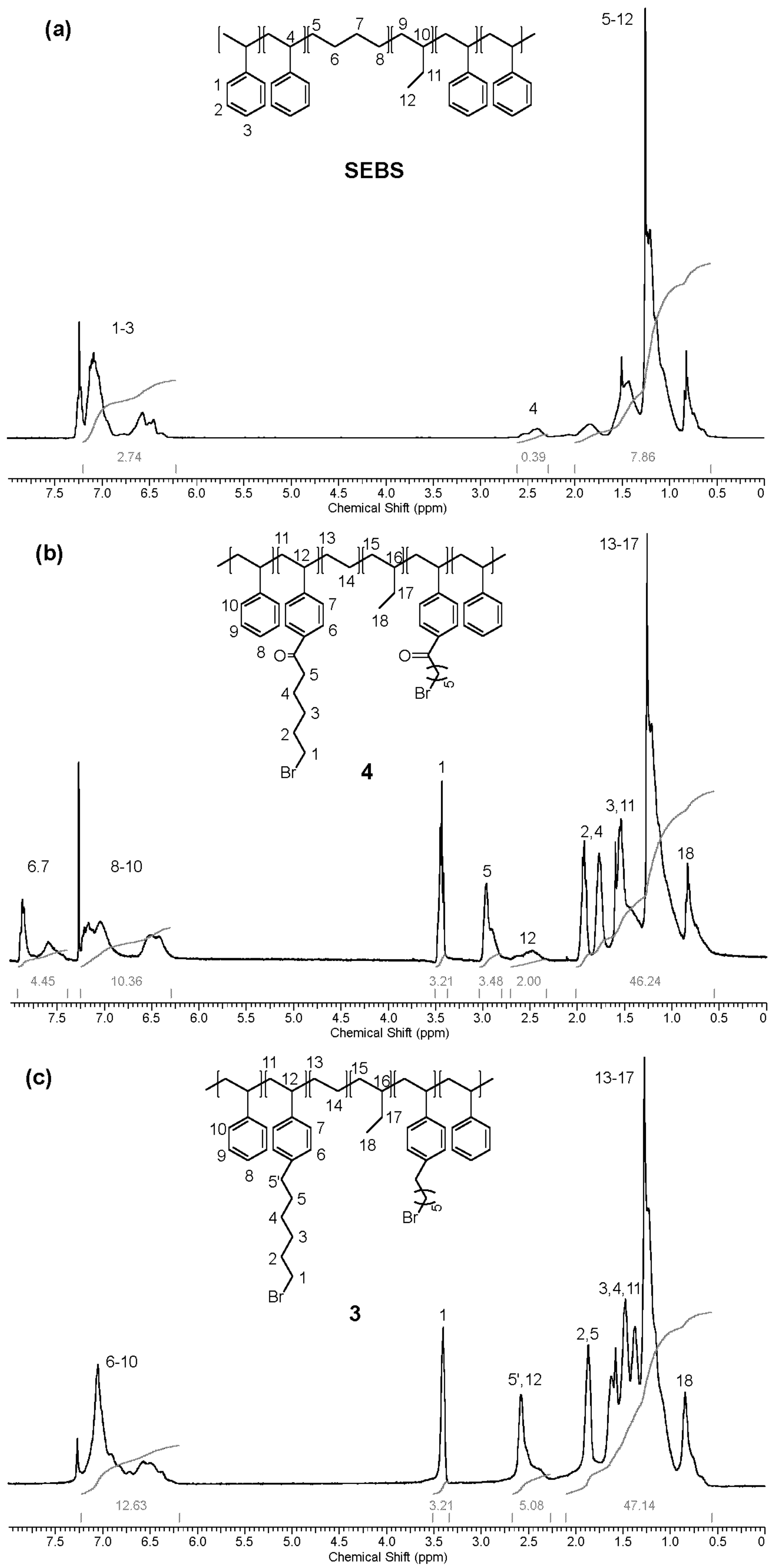
(a)
SEBS
5-12
1-3
4
2.74
0.39
7.86
Chemical Shift (ppm)
(b)
4
13-17
6.7
8-10
1
5
12
2,4
3,11
18
4.45
10.36
3.21
3.48
2.00
46.24
Chemical Shift (ppm)
(c)
3
13-17
6-10
1
5',12
2,5
3,4,11
18
12.63
3.21
5.08
47.14
Chemical Shift (ppm)

【FIG. 11】

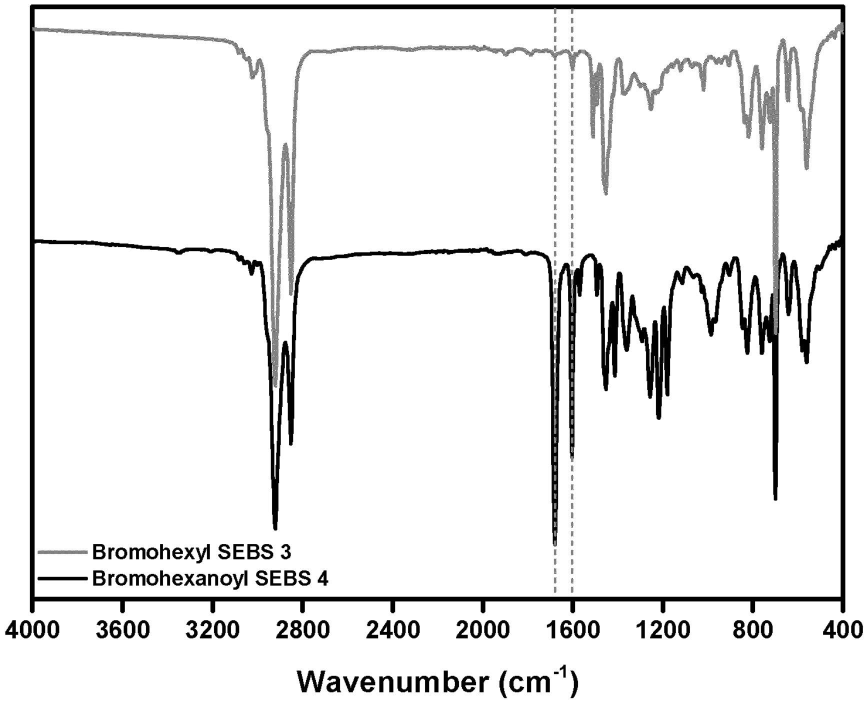
Bromohexyl SEBS 3
Bromohexanoyl SEBS 4
4000
3600
3200
2800
2400
2000
1600
1200
800
400
Wavenumber (cm-1)

【FIG. 12】

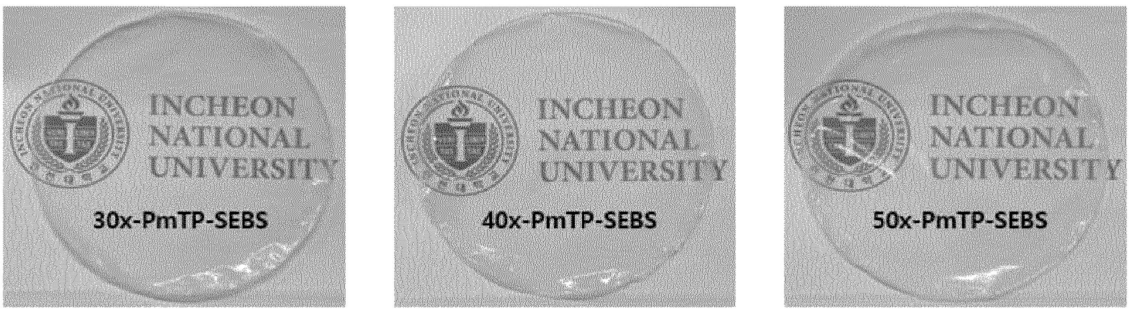
INCHEON NATIONAL UNIVERSITY
30x-PmTP-SEBS
INCHEON NATIONAL UNIVERSITY
40x-PmTP-SEBS
INCHEON NATIONAL UNIVERSITY
50x-PmTP-SEBS

【FIG. 13】

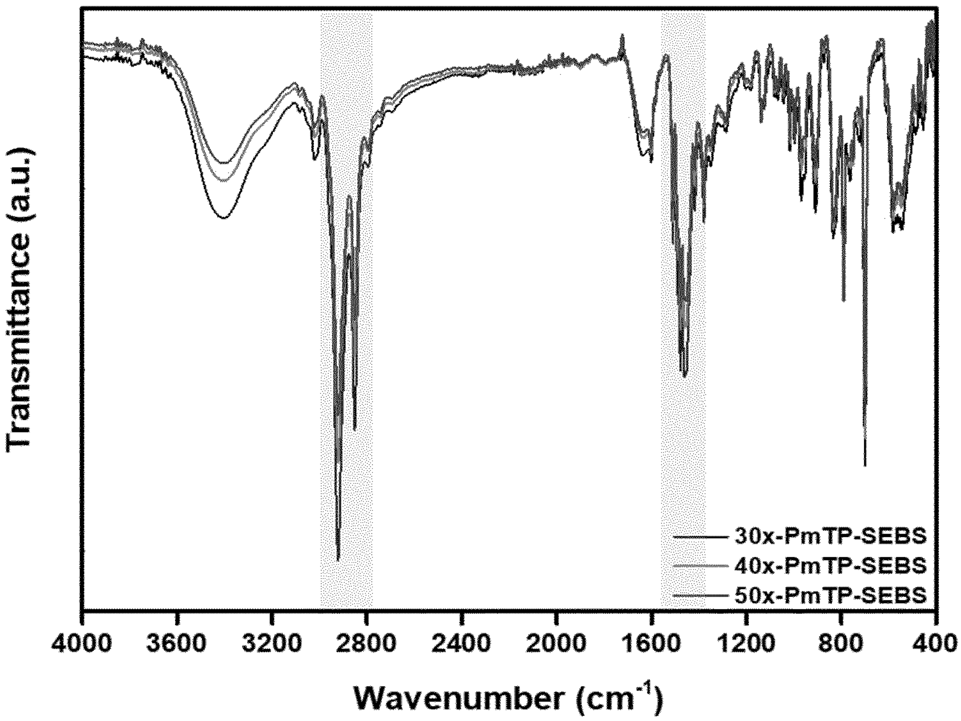
Transmittance (a.u.)
Wavenumber (cm-1)
4000 3600 3200 2800 2400 2000 1600 1200 800 400
30x-PmTP-SEBS
40x-PmTP-SEBS
50x-PmTP-SEBS

【FIG. 14】

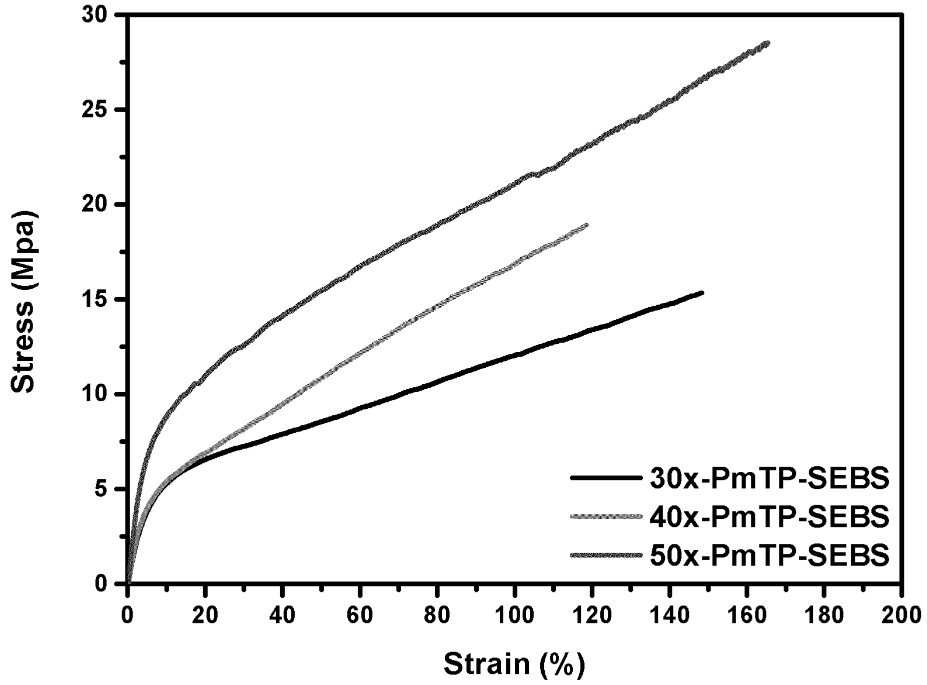

Stress (Mpa)
Strain (%)
30x-PmTP-SEBS
40x-PmTP-SEBS
50x-PmTP-SEBS


【FIG. 15】

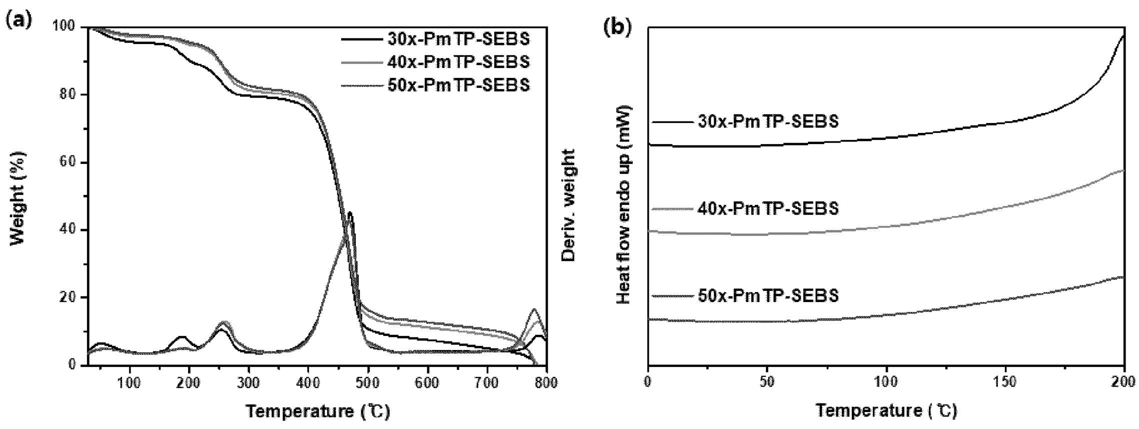

(a)
Weight (%)
Deriv. weight
Temperature (℃)
30x-PmTP-SEBS
40x-PmTP-SEBS
50x-PmTP-SEBS
(b)
Heat flow endo up (mW)
Temperature (℃)
30x-PmTP-SEBS
40x-PmTP-SEBS
50x-PmTP-SEBS

【FIG. 16】

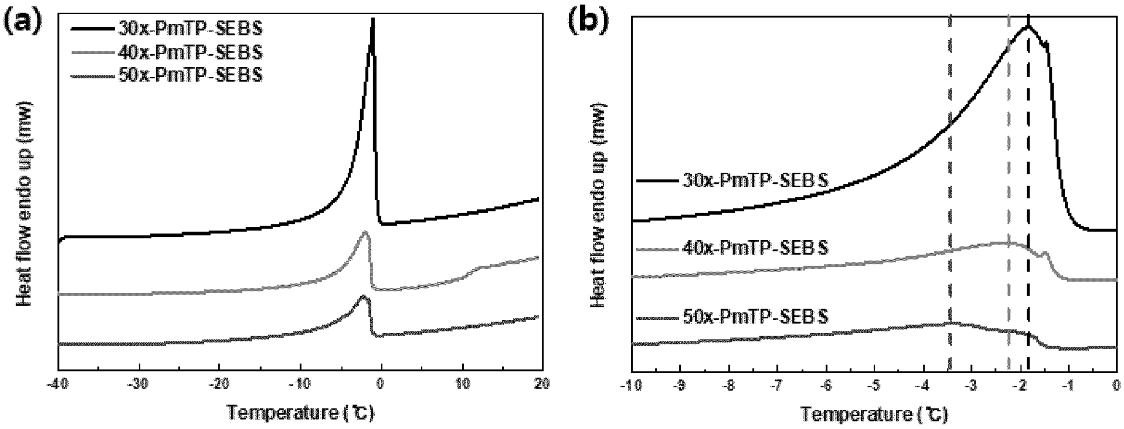
(a)
30x-PmTP-SEBS
40x-PmTP-SEBS
50x-PmTP-SEBS
Heat flow endo up (mw)
-40
-30
-20
-10
0
10
20
Temperature (℃)
(b)
30x-PmTP-SEBS
40x-PmTP-SEBS
50x-PmTP-SEBS
Heat flow endo up (mw)
-10
-9
-8
-7
-6
-5
-4
-3
-2
-1
0
Temperature (℃)

【FIG. 17】

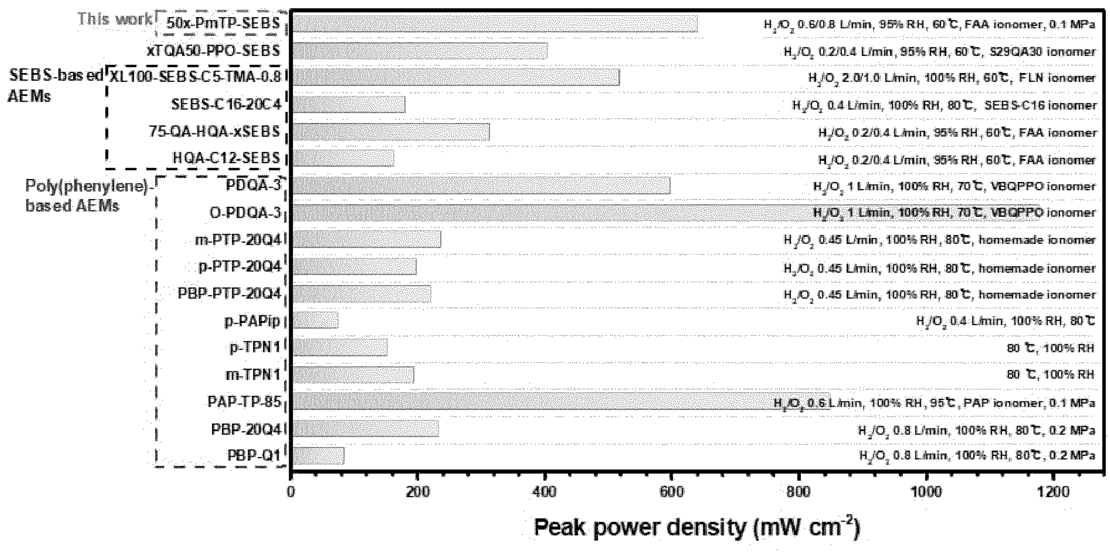
This work
50x-PmTP-SEBS
xTQA50-PPO-SEBS
SEBS-based AEMs
XL100-SEBS-C5-TMA-0.8
SEBS-C16-20C4
75-QA-HQA-xSEBS
HQA-C12-SEBS
Poly(phenylene)-based AEMs
PDQA-3
O-PDQA-3
m-PTP-20Q4
p-PTP-20Q4
PBP-PTP-20Q4
p-PAPip
p-TPN1
m-TPN1
PAP-TP-85
PBP-20Q4
PBP-Q1
$H_2/O_2$ 0.6/0.8 L/min, 95% RH, 60℃, FAA ionomer, 0.1 MPa
$H_2/O_2$ 0.2/0.4 L/min, 95% RH, 60℃, S29QA30 ionomer
$H_2/O_2$ 2.0/1.0 L/min, 100% RH, 60℃, FLN ionomer
$H_2/O_2$ 0.4 L/min, 100% RH, 80℃, SEBS-C16 ionomer
$H_2/O_2$ 0.2/0.4 L/min, 95% RH, 60℃, FAA ionomer
$H_2/O_2$ 0.2/0.4 L/min, 95% RH, 60℃, FAA ionomer
$H_2/O_2$ 1 L/min, 100% RH, 70℃, VBQPPO ionomer
$H_2/O_2$ 1 L/min, 100% RH, 70℃, VBQPPO ionomer
$H_2/O_2$ 0.45 L/min, 100% RH, 80℃, homemade ionomer
$H_2/O_2$ 0.45 L/min, 100% RH, 80℃, homemade ionomer
$H_2/O_2$ 0.45 L/min, 100% RH, 80℃, homemade ionomer
$H_2/O_2$ 0.4 L/min, 100% RH, 80℃
80 ℃, 100% RH
80 ℃, 100% RH
$H_2/O_2$ 0.6 L/min, 100% RH, 95℃, PAP ionomer, 0.1 MPa
$H_2/O_2$ 0.8 L/min, 100% RH, 80℃, 0.2 MPa
$H_2/O_2$ 0.8 L/min, 100% RH, 80℃, 0.2 MPa
0
200
400
600
800
1000
1200
Peak power density (mW cm$^{-2}$)

**INTERNATIONAL SEARCH REPORT**

International application No.
**PCT/KR2023/001561**

**A. CLASSIFICATION OF SUBJECT MATTER**

**H01M 8/103**(2016.01)i; **C08J 5/22**(2006.01)i; **C08F 236/10**(2006.01)i; **C08G 61/02**(2006.01)i; **H01M 8/1039**(2016.01)i

According to International Patent Classification (IPC) or to both national classification and IPC

**B. FIELDS SEARCHED**

Minimum documentation searched (classification system followed by classification symbols)

H01M 8/103(2016.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, CAplus) & keywords: 가교 공중합체(crosslinked copolymer), 음이온 교환막(anion exchange membrane), 폴리(스티렌-b-에틸렌-co-부틸렌-b-스티렌)(poly(styrene-b-ethylene-co-butylene-b-styrene), (SEBS)), 피페리딘(piperidine)

**C. DOCUMENTS CONSIDERED TO BE RELEVANT**

| Category* | Citation of document, with indication, where appropriate, of the relevant passages | Relevant to claim No. |
|---|---|---|
| Y | WANG, L. et al. Covalent cross-linked anion exchange membrane based on poly(biphenyl piperidine) and poly(styrene-b-(ethylene-co-butylene)-b-styrene): preparation and properties. Polymer-plastics technology and materials. 2021, vol. 60, no. 11, pp. 1233-1246.<br>See abstract; paragraphs 2.2.3. and 2.2.4.; and formulas 2-4. | 1-13 |
| Y | WANG, X. et al. Anion exchange membranes with twisted poly(terphenylene) backbone: Effect of the N-cyclic cations. Journal of membrane science. 2021, vol. 635, article no. 119525, pp. 1-12.<br>See abstract; page 2; and formula 1. | 1-13 |
| A | MOHANTY, A. D. et al. Stable elastomeric anion exchange membranes based on quaternary ammonium-tethered polystyrene-b-poly (ethylene-co-butylene)-b-polystyrene triblock copolymers. Macromolecules. 2015, vol. 48, no. 19, pp. 7085-7095.<br>See entire document. | 1-13 |
| A | DAI, P. et al. Cross-linked quaternized poly(styrene-b-(ethylene-co-butylene)-b-styrene) for anion exchange membrane: synthesis, characterization and properties. ACS Applied Materials & Interfaces. 2016, vol. 8, no. 31, pp. 20329-20341.<br>See entire document. | 1-13 |

☑ Further documents are listed in the continuation of Box C. ☐ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **02 May 2023** | **02 May 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.
**PCT/KR2023/001561**

**C. DOCUMENTS CONSIDERED TO BE RELEVANT**

| Category* | Citation of document, with indication, where appropriate, of the relevant passages | Relevant to claim No. |
|---|---|---|
| A | 민경화 등. Terphenyl-SEBS 가교형 고분자 기반 알칼리 연료전지용 음이온 교환막의 개발. 한국공업화학회. 2021, vol. 25, no. 2, non-official translation (MIN, Kyung-Hwa et al. Development of Terphenyl-SEBS Crosslinked Polymer-Based Anion Exchange Membrane for Alkaline Fuel Cell. The Korean Society of Industrial and Engineering Chemistry.)<br>See entire document. | 1-13 |

Form PCT/ISA/210 (second sheet) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020220014254
- KR 1020230014346
- KR 101535062


### Non-patent literature cited in the description


- *Nat. Energy*, 2019, vol. 4, 392-398
- *Nat. Commun.*, 2021, vol. 12, 2367
- *Adv. Funct. Mater.*, 2018, vol. 28, 1-10
- *Int. J. Hydrogen Energy*, 2021, vol. 46, 18524-18533
- *J. Mater. Chem. A.*, 2021, vol. 9, 327-337
- *J. Membr. Sci.*, 2022, vol. 642, 119966
- *ACS Macro Lett.*, 2017, vol. 6, 566-570
- *Energy Environ. Sci.*, 2020, vol. 13, 3633-3645
- *J. Power Sources*, 2021, vol. 487, 229429
- *J. Power Sources*, 2020, vol. 480, 228805
- *Angew. Chem. Int. Ed*, 2022, vol. 61, 1-8
- *J. Membr. Sci.*, 2022, vol. 643, 120029
- *J. Membr. Sci.*, 2020, vol. 599, 117829
- *J. Membr. Sci.*, 2022, vol. 644, 120109
- *Eur. Polym. J.*, 2021, vol. 154, 110528
- *J. Polym. Sci.*, 2020, vol. 58, 2181-2196
- *Int. J. Hydrogen Energy*, 2021, vol. 46, 36301-36313
- *Int. J.Hydrogen Energy*, 2020, vol. 45, 15658-15671
- *J. Mater. Chem. A.*, 2021, vol. 9, 1062-1079
- *J. Membr. Sci.*, 2021, vol. 633, 119418
- *Membranes*, 2020, vol. 10, 1-16
- *J. Membr. Sci.*, 2020, vol. 598
- *Macromolecules*, 2019, vol. 52, 2139-2147
- *J. Membr. Sci.*, 2019, vol. 588, 117120
- *Int. J. Hydrogen Energy*, 2019, vol. 44, 24954-24964
- *Energy Environ.Sci.*, 2020, vol. 13, 3633-3645
- *ACS Macro Lett*, 2017, vol. 6, 566-570
- *Angew. Chem. Int. Ed.*, 2022, vol. 61, 1-8